# EUROPEAN PATENT APPLICATION

(11) **EP 4 429 305 A1**
(43) Date of publication of application: **11.09.2024**
(21) Application number: 21963247.8
(22) Date of filing: 04.11.2021
(51) Int. Cl.: H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2021/040660
(87) International publication number: WO 2023/079651

(57) **Abstract**

A terminal according to one aspect of the present disclosure includes: a receiving section that receives a configuration related to a transmission configuration indication (TCI) state applied to a plurality of types of at least one of channels and signals; and a control section that determines whether the TCI state is shared with a specific signal. According to one aspect of the present disclosure, it is possible to appropriately recognize a relationship of a TCI state of a specific channel/RS, an RS for at least one of radio link monitoring, beam failure detection, and new beam detection, and a unified TCI state.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

A unified TCI state for applying a configured/activated/indicated TCI state to a plurality of types of channels / reference signals (RSs) is studied. However, a relationship of a TCI state of a specific channel/RS, an RS for at least one of radio link monitoring, beam failure detection, and new beam detection, and a unified TCI state is not clear. Unless such a relationship is clear, degradation in communication quality, throughput reduction, and the like may occur.

Thus, an object of the present disclosure is to provide a terminal, a radio communication method, and a base station that enable appropriate recognition of a relationship of a TCI state of a specific channel/RS, an RS for at least one of radio link monitoring, beam failure detection, and new beam detection, and a unified TCI state.

### Solution to Problem

A terminal according to one aspect of the present disclosure includes: a receiving section that receives a configuration related to a transmission configuration indication (TCI) state applied to a plurality of types of at least one of channels and signals; and a control section that determines whether the TCI state is shared with a specific signal. Advantageous Effects of Invention

According to one aspect of the present disclosure, it is possible to appropriately recognize a relationship of a TCI state of a specific channel/RS, an RS for at least one of radio link monitoring, beam failure detection, and new beam detection, and a unified TCI state.

### Brief Description of Drawings

[FIG. 1] FIG. 1 is a diagram to show an example of simultaneous beam update in a plurality of CCs.
[FIG. 2] FIGS. 2A and 2B are each a diagram to show an example of a unified/common TCI framework.
[FIG. 3] FIGS. 3A and 3B are diagrams to show an example of a CC-specific TCI state pool and a CC-common TCI state pool.
[FIG. 4] FIGS. 4A and 4B are each a diagram to show examples of a TCI state in a CC-specific TCI state pool.
[FIG. 5] FIGS. 5A and 5B are each a diagram to show examples of a TCI state in a CC-common TCI state pool.
[FIG. 6] FIGS. 6A and 6B are each a diagram to show examples of a CC-specific RS in a TCI state.
[FIG. 7] FIGS. 7A and 7B are each a diagram to show examples of a CC-common RS in a TCI state.
[FIG. 8] FIG. 8 is a diagram to show an example of a BFR procedure.
[FIG. 9] FIG. 9 is a diagram to show an example of indication method 1-1.
[FIG. 10] FIG. 10 is a diagram to show an example of a list of resources / resource sets according to Aspect 1-2.
[FIG. 11] FIGS. 11A to 11C are each a diagram to show an example of an enabler according to indication method 2-1.
[FIG. 12] FIG. 12 is a diagram to show examples of a joint TCI state according to indication method 2-1.
[FIG. 13] FIG. 13 is a diagram to show examples of separate TCI states according to indication method 2-1.
[FIG. 14] FIG. 14 is a diagram to show an example of indication method 2-2.
[FIG. 15] FIG. 15 is a diagram to show an example of indication method 2-3.
[FIG. 16] FIG. 16 is a diagram to show an example of indication method 2-4.
[FIG. 17] FIG. 17 is a diagram to show another example of indication method 2-4.
[FIG. 18] FIG. 18 is a diagram to show an example of relationships between a TCI field value and presence/absence of sharing according to indication method 2-4.
[FIG. 19] FIG. 19 is a diagram to show examples of a joint TCI state according to Aspect 2-1.
[FIG. 20] FIG. 20 is a diagram to show examples of a separate TCI state according to Aspect 2-1.
[FIG. 21] FIG. 21 is a diagram to show an example of Aspect 3-2.
[FIG. 22] FIG. 22 is a diagram to show another example of Aspect 3-2.
[FIG. 23] FIG. 23 is a diagram to show an example of a fourth embodiment.
[FIG. 24] FIG. 24 is a diagram to show an example of a schematic structure of a radio communication system according to one embodiment.
[FIG. 25] FIG. 25 is a diagram to show an example of a structure of a base station according to one embodiment.
[FIG. 26] FIG. 26 is a diagram to show an example of a structure of a user terminal according to one embodiment.
[FIG. 27] FIG. 27 is a diagram to show an example of a hardware structure of the base station and the user terminal according to one embodiment.
[FIG. 28] FIG. 28 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Simultaneous Beam Update of Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two applicable CC lists may correspond to inter-band CA in FR1 and inter-band CA in FR2.

A network may transmit a TCI states activation/deactivation for UE-specific PDSCH MAC CE to activate and deactivate a configured TCI state of a serving cell or a set of serving cells configured in simultaneous TCI update list 1 (simultaneousTCI-UpdateList1) or simultaneous TCI update list 2 (simultaneousTCI-UpdateList2). If an indicated serving cell is configured as part of the simultaneous TCI update list 1 or the simultaneous TCI update list 2, the MAC CE is applied to all the serving cells configured in the simultaneous TCI update list 1 or the simultaneous TCI update list 2.

The network may transmit a TCI states Indication for UE-specific PDCCH MAC CE to indicate a configured TCI state of a serving cell or a set of serving cells configured in the simultaneous TCI update list 1 (simultaneousTCI-UpdateList1) or the simultaneous TCI update list 2 (simultaneousTCI-UpdateList2). If an indicated serving cell is configured as part of the simultaneous TCI update list 1 or the simultaneous TCI update list 2, the MAC CE is applied to all the serving cells configured in a set of the simultaneous TCI update list 1 or the simultaneous TCI update list 2.

An activation MAC CE for a TCI state of a PDCCH activates TCI states associated with the same CORESET ID in all the BWPs/CCs in an applicable CC list.

An activation MAC CE for a TCI state of a PDSCH activates TCI states in all the BWPs/CCs in the applicable CC list.

An activation MAC CE for a spatial relation of an A-SRS/SP-SRS activates spatial relations associated with the same SRS resource ID in all the BWPs/CCs in the applicable CC list.

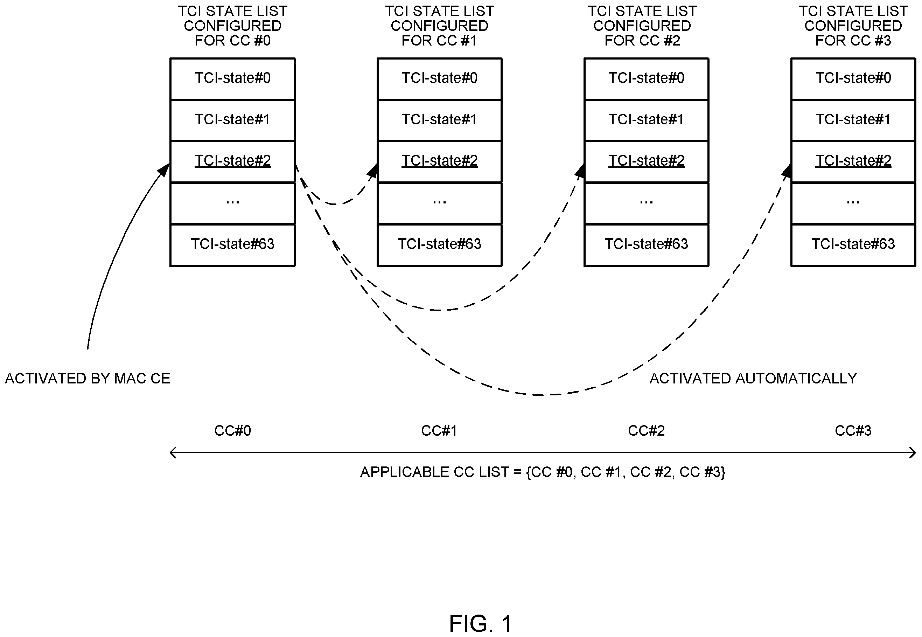

In the example in FIG. 1, the UE is configured with an applicable CC list indicating CCs #0, #1, #2, and #3 and a list indicating 64 TCI states for a CORESET or a PDSCH in each of the CCs. When one TCI state in CC #0 is activated by a MAC CE, corresponding TCI states are activated in CCs #1, #2, and #3.

It is studied that such simultaneous beam update is applicable only to a single-TRP case.

For a PDSCH, the UE may be based on procedure A below.

### {Procedure A}

The UE receives an activation command for mapping up to eight TCI states to a codepoint in a DCI field (TCI field) in one CC / DL BWP or in one set of CCs/BWPs. When one set of TCI state IDs is activated for one set of CCs / DL BWPs, an applicable CC list is determined by a CC(s) indicated in an activation command, and a set of TCI states being the same is applied to all the DL BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the one set of TCI state IDs can be activated for one set of CCs / DL BWPs.

For a PDCCH, the UE may be based on procedure B below.

### {Procedure B}

If the UE is provided with up to two lists of cells for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies, to CORESETs with an index p in all the configured DL BWPs in all the configured cells in one list determined based on a serving cell index provided by a MAC CE command, an antenna port quasi co-location (QCL) provided by TCI states with the same activated TCI state ID value. Only if the UE is not provided with a plurality of different values of CORESET pool indices (CORESETPoolIndex) in a CORESET information element (ControlResourceSet) and is not provided with at least one TCI codepoint mapped to two TCI states, the UE can be provided with a simultaneous TCI cell list for simultaneous TCI state activation.

For a semi-persistent (SP) / aperiodic (AP)-SRS, the UE may be based on procedure C below.

### {Procedure C}

When an SP configured by an SRS resource information element (higher layer parameter SRS-Resource) or spatial relation information (spatialRelationInfo) for an AP-SRS resource is activated/updated by a MAC CE for one set of CCs/BWPs, an applicable CC list is indicated by a simultaneous spatial update list (higher layer parameter simultaneousSpatial-UpdateList-r16 or simultaneousSpatial-UpdateListSecond-r16), and the spatial relation information is applied to SP or AP-SRS resources with the same SRS resource ID in all the BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the SP configured by the SRS resource information element (higher layer parameter SRS-Resource) or spatial relation information (spatialRelationInfo) for the AP-SRS resource is activated/updated by an MAC CE for the one set of CCs/BWPs.

The simultaneous TCI cell list (simultaneousTCI-CellList) and simultaneous TCI update lists (at least one of simultaneousTCI-UpdateList1-r16 and simultaneousTCI-UpdateList2-r16) are lists of serving cells for which a TCI relationship can be updated simultaneously by using a MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells for which a spatial relationship can be updated simultaneously by using a MAC CE. simultaneousSpatial-UpdatedList1-r16 and simultaneousSpatial-UpdatedList2-r16 do not include the same serving cell.

Here, the simultaneous TCI update lists and the simultaneous spatial update lists are configured by RRC, a CORESET pool index of a CORESET is configured by RRC, and a TCI codepoint mapped to TCI state(s) is indicated by a MAC CE.

In the present disclosure, a CC list, a new CC list, a simultaneous TCI cell list, simultaneousTCI-CellList, a simultaneous TCI update list, simultaneousTCI-UpdateList1-r16, a simultaneousTCI-UpdateList2-r16, a simultaneous spatial update list, simultaneousSpatial-UpdatedList1-r16, and simultaneousSpatial-UpdatedList2-r16 may be interchangeably interpreted.

In the present disclosure, simultaneousTCI-UpdateList1, simultaneousTCI-UpdateList1-r16, and simultaneousTCI-UpdateList-r16 may be interchangeably interpreted. In the present disclosure, simultaneousTCI-UpdateList2, simultaneousTCI-UpdateList2-r16, and simultaneousTCI-UpdateListSecond-r16 may be interchangeably interpreted.

In the present disclosure, simultaneousSpatial-UpdatedList1, simultaneousSpatial-UpdatedList1-r16, and simultaneousSpatial-UpdateList-r16 may be interchangeably interpreted. In the present disclosure, simultaneousSpatial-UpdatedList2, simultaneousSpatial-UpdatedList2-r16, and simultaneousSpatial-UpdateListSecond-r16 may be interchangeably interpreted.

### (Unified/Common TCI Framework)

With a unified TCI framework, UL and DL channels can be controlled by a common framework. A unified TCI framework may indicate a common beam (common TCI state) and apply the common beam to all the UL and DL channels, or apply a common beam for UL to all the UL channels while applying a common beam for DL to all the DL channels, instead of defining a TCI state or a spatial relation for each channel as in Rel. 15.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. At least one of N and M may be notified of / configured for / indicated to a UE via higher layer signaling / physical layer signaling.

In the present disclosure, when it is described that N = M = X (X is any integer), this may mean that X TCI states (corresponding to X TRPs) common to UL and DL (joint TCI states) are notified/configured/indicated to the UE. When it is described that N = X (X is any integer) and M = Y (Y is any integer, Y = X may hold), this may mean that X UL TCI states (corresponding to X TRPs) and Y DL TCI states (corresponding to Y TRPs) (in other words, separate TCI states) are notified/configured/indicated separately to the UE.

For example, when it is described that N = M = 1, this may mean that one TCI state common to UL and DL for a single TRP is notified/configured/indicated to the UE (joint TCI state for a single TRP) .

For example, when it is described that N = 1 and M = 1, this may mean that one UL TCI state and one DL TCI state for a single TRP are notified/configured/indicated separately to the UE (separate TCI states for a single TRP) .

For example, when it is described that N = M = 2, this may mean that a plurality of (two) TCI states common to UL and DL for a plurality of (two) TRPs are notified/configured/indicated to the UE (joint TCI states for a plurality of TRPs).

For example, when it is described that N = 2 and M = 2, this may mean that a plurality of (two) UL TCI states and a plurality of (two) DL TCI states for a plurality of (two) TRPs are notified/configured/indicated to the UE (separate TCI states for a plurality of TRPs).

Note that, in the above examples, cases where the values N and M are each one or two have been described. However, the values N and M may each be three or more, or N and M may be different from each other.

In Rel. 17, it is studied to support N = M = 1. In Rel. 18 and later versions, it is studied to support other cases.

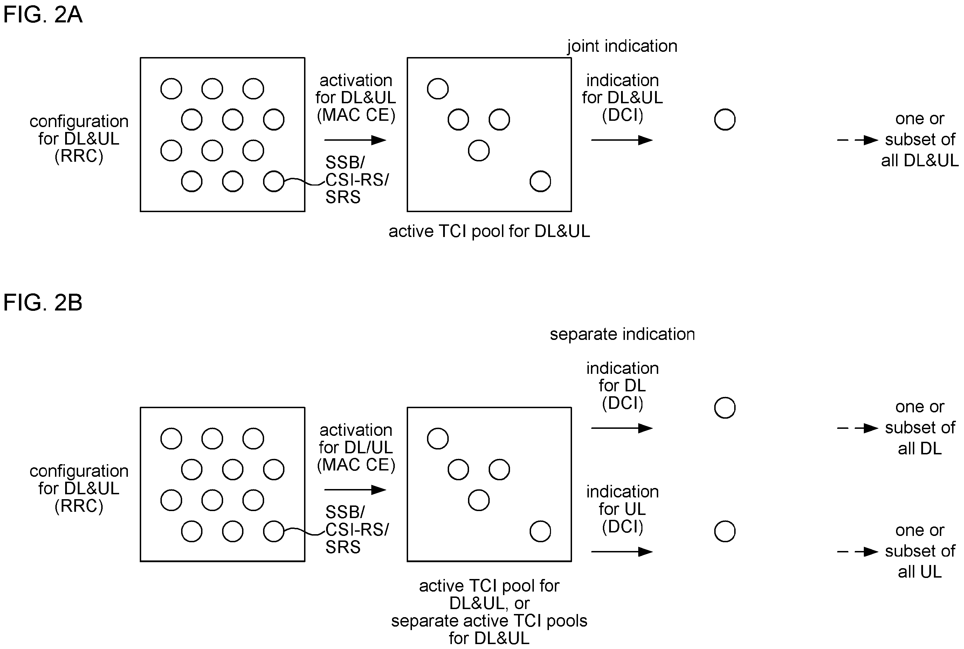

In the example in FIG. 2A, an RRC parameter (information element) configures a plurality of TCI states for both DL and UL. A MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in this drawing, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 2B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Beam indication DCI for a unified/common TCI state may be DCI format 1_1/1_2 with DL assignment (scheduling).

The beam indication DCI for a unified/common TCI state may be DCI format 1_1/1_2 without DL assignment (scheduling) or may be a new DCI format. This is useful when DL data is absent but a beam indication for a unified/common TCI state is present.

### (Unified TCI State Pool in CA)

In a unified TCI framework of Rel. 17, assumptions 1-1 to 1-4 below are studied for update and activation of a common TCI state ID for providing at least one of common QCL information for UE-dedicated PDCCH/PDSCH and a common UL TX spatial filter for UE-dedicated PUSCH/PUCCH over a set of a plurality of CCs / plurality of BWPs.

### {Assumption 1-1}

An RRC-configured TCI state pool may be configured in a PDSCH configuration (PDSCH-Config) for each BWP/CC as in Rel. 15/16. Such an RRC-configured TCI state pool configuration does not imply that a separate DL/UL TCI state pool is excluded or supported.

### {Assumption 1-2}

An RRC-configured TCI state pool may be absent in a PDSCH configuration (PDSCH-Config) for each BWP/CC and may be replaced with a reference to an RRC-configured TCI state pool in a reference BWP/CC. In the PDSCH configuration (PDSCH-Config) for the reference BWP/CC, the RRC-configured TCI state pool is configured. For a BWP/CC having a PDSCH configuration including a reference to the RRC-configured TCI state pool in the reference BWP/CC, the UE applies the RRC-configured TCI state pool in the reference BWP/CC.

### {Assumption 1-3}

When a BWP/CC ID (bwp-Id/cell) for a source RS of QCL type A/D in QCL information (QCL-Info) of a TCI state is absent, the UE assumes that a source 1-RS of QCL type A/D is present in a BWP/CC to which the TCI state is applied.

### {Assumption 1-4}

A UE capability for reporting the maximum number of TCI state pools supported over a plurality of BWPs and a plurality of CCs within a band is introduced, and candidate values for the maximum number include at least 1.

In a unified TCI framework of Rel. 17, assumptions 2-1 to 2-3 below are studied for update and activation of a common TCI state ID for providing at least one of common QCL information for UE-dedicated PDCCH/PDSCH and a common UL TX spatial filter for UE-dedicated PUSCH/PUCCH over a set of a plurality of CCs / plurality of BWPs.

### {Assumption 2-1}

A source RS determined based on a common TCI state ID indicated to provide a QCL type D indication and determine a UL TX spatial filter for a target CC may be configured in the target CC or another CC.

### {Assumption 2-2}

Configurations 1 and 2 below may be supported without any additional QCL rule, for intra-band CA.
{{Configuration 1}} One source RS over a plurality of CCs may be determined based on a common TCI state ID indicated to provide a QCL type D indication and determine a UL TX spatial filter for a set of configured CCs.
{{Configuration 2}} One source RS per CC may be determined based on a common TCI state ID indicated to provide a QCL type D indication and determine a UL TX spatial filter for a set of configured CCs. A plurality of CC-specific source RSs may be associated with the same QCL type D RS.

### {Assumption 2-3}

A set of configured CCs/BWPs include all the BWPs in the configured CCs.

In CA, a CC-specific TCI state pool/configuration (case 1) and a CC-common TCI state pool/configuration (case 2) may be supported.

### {Case 1}

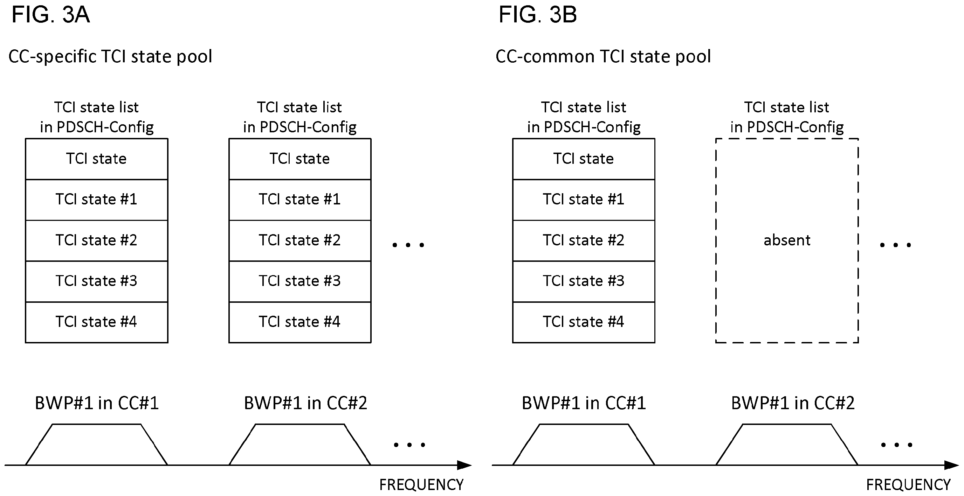

FIG. 3A shows an example of a CC-specific TCI state pool. In this example, a TCI state list in a PDSCH configuration is configured for BWP 1 in CC 1, and a TCI state list in a PDSCH configuration is configured for BWP 1 in CC 2. One MAC CE / piece of DCI indicates a TCI state ID.

### {Case 2}

FIG. 3B shows an example of a CC-common TCI state pool. In this example, a TCI state list in a PDSCH configuration is configured for BWP 1 in CC 1, and a TCI state list in a PDSCH configuration is not configured (absent) for BWP 1 in CC 2. One MAC CE / piece of DCI indicates a TCI state ID (for example, TCI state #2).

One TCI state information element (TCI-State) in a TCI state pool may include a TCI state ID, QCL type 1 (QCL information, QCL-Info), and QCL type 2 (QCL information, QCL-Info).

### {Case 1}

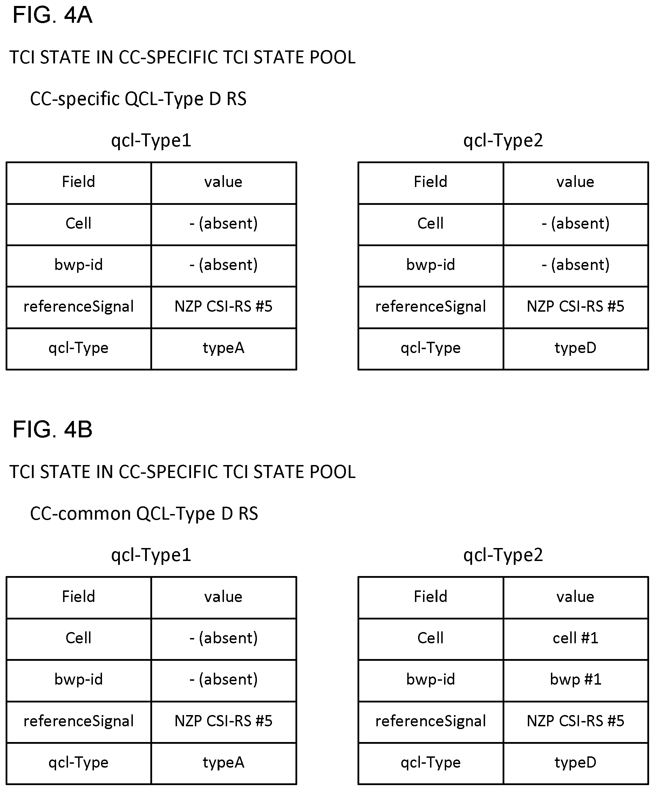

FIG. 4A shows an example where a TCI state in a CC-specific TCI state pool indicates a CC-specific QCL type D RS. QCL type 1 does not include a cell ID and a BWP ID but includes a reference signal (referenceSignal = NZP-CSI-RS #5) and a QCL type (qcl-Type = typeA). QCL type 2 does not include a cell ID and a BWP ID but includes a reference signal (referenceSignal = NZP-CSI-RS #5) and a QCL type (qcl-Type = typeD).

FIG. 4B shows an example where a TCI state in a CC-specific TCI state pool indicates a CC-common QCL type D RS. QCL type 1 does not include a cell ID and a BWP ID but includes a reference signal (referenceSignal = NZP-CSI-RS #5) and a QCL type (qcl-Type = typeA). QCL type 2 includes a cell ID (cell = #1), a BWP ID (bwp-Id = #1), a reference signal (referenceSignal = NZP-CSI-RS #5), and a QCL type (qcl-Type = typeD).

### {Case 2}

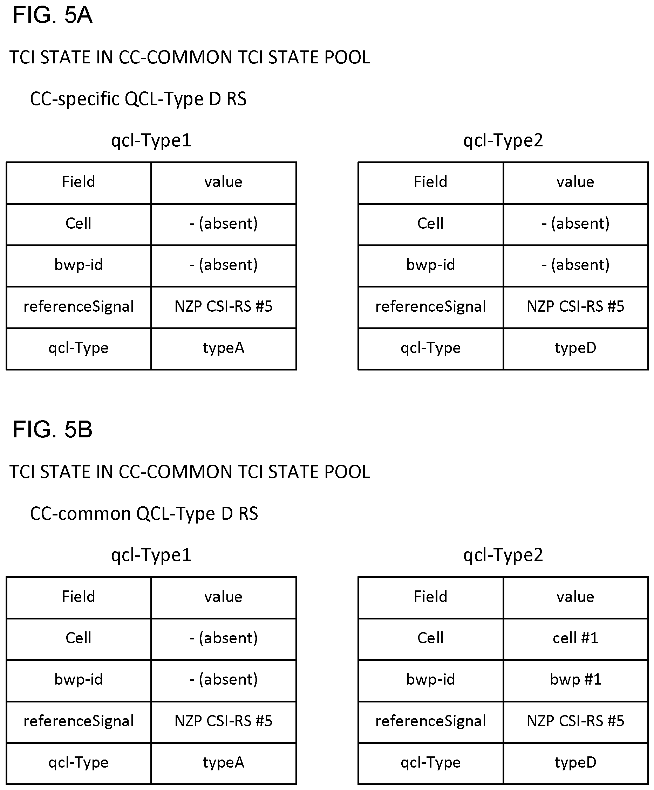

FIG. 5A shows an example where a TCI state in a CC-common TCI state pool indicates a CC-specific QCL type D RS. QCL type 1 does not include a cell ID and a BWP ID but includes a reference signal (referenceSignal = NZP-CSI-RS #5) and a QCL type (qcl-Type = typeA). QCL type 2 does not include a cell ID and a BWP ID but includes a reference signal (referenceSignal = NZP-CSI-RS #5) and a QCL type (qcl-Type = typeD).

FIG. 5B shows an example where a TCI state in a CC-common TCI state pool indicates a CC-common QCL type D RS. QCL type 1 does not include a cell ID and a BWP ID but includes a reference signal (referenceSignal = NZP-CSI-RS #5) and a QCL type (qcl-Type = typeA). QCL type 2 includes a cell ID (cell = #1), a BWP ID (bwp-Id = #1), a reference signal (referenceSignal = NZP-CSI-RS #5), and a QCL type (qcl-Type = typeD).

In both cases 1 and 2, a TCI state may indicate a CC-specific (BWP/CC-specific) RS (for example, a QCL type A RS) in each BWP/CC.

### {Case 1}

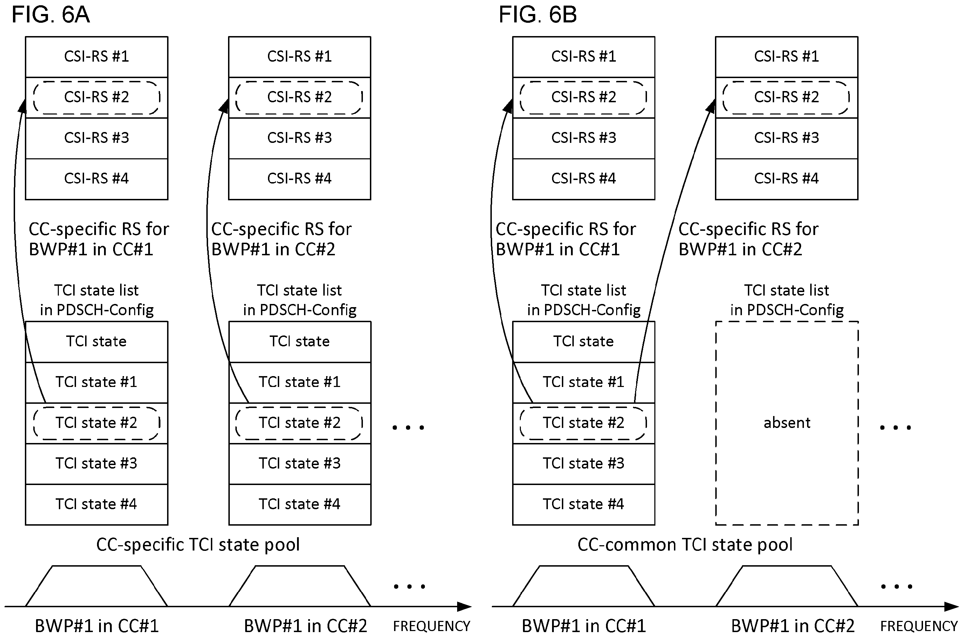

FIG. 6A shows an example where TCI states in a CC-specific TCI state pool indicate CC-specific RSs. A TCI state configured for BWP 1 in CC 1 indicates a CC-specific RS for BWP 1 in CC 1. A TCI state configured for BWP 1 in CC 2 indicates a CC-specific RS for BWP 1 in CC 2.

### {Case 2}

FIG. 6B shows an example where a TCI state in a CC-common TCI state pool indicates CC-specific RSs. A TCI state configured for BWP 1 in CC 1 indicates (the same RS ID of) a CC-specific RS for BWP 1 in CC 1 and a CC-specific RS for BWP 1 in CC 2. The TCI state configured for BWP 1 in CC 1 need not include a BWP/CC ID.

In both cases 1 and 2, a TCI state may indicate a CC-common (BWP/CC-common) RS (for example, a QCL type D RS of a CSI-RS with repetition) in each BWP/CC.

### {Case 1}

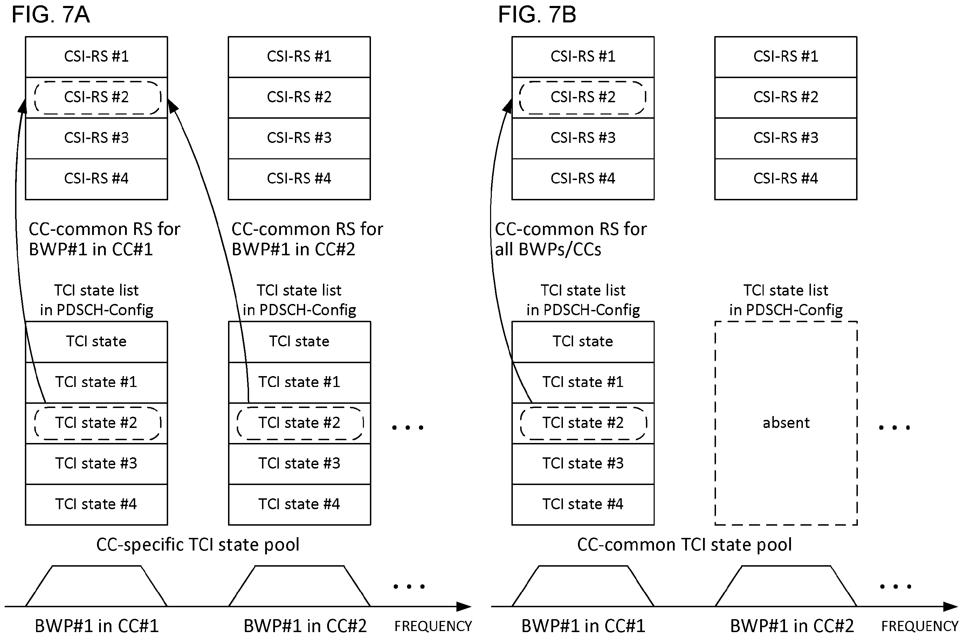

FIG. 7A shows an example where TCI states in a CC-specific TCI state pool indicate a CC-common RS. A TCI state configured for BWP 1 in CC 1 indicates a CC-common RS for BWP 1 in CC 1, and a TCI state configured for BWP 1 in CC 2 indicates the (same) CC-common RS for BWP 1 in CC2.

### {Case 2}

FIG. 7B shows an example where a TCI state in a CC-common TCI state pool indicates a CC-common RS. A TCI state configured for BWP 1 in CC 1 indicates a CC-common RS for all the CCs/BWPs.

In the present disclosure, a TCI state may include a QCL type A RS / QCL type D RS, may include a QCL type A RS for frequency range (FR) 1, or may include a QCL type A RS / QCL type D RS for FR2.

### (Multi-TRP PDSCHs)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)).

For Ultra-Reliable and Low Latency Communications (URLLC) for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, reliability enhancement schemes, for example, schemes 1a, 2a, 2b, 3, and 4). In scheme 1a, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Unified TCI Framework in Carrier Aggregation (CA))

For NR in Rel. 17 (later versions), it is studied to introduce a unified TCI state framework in CA. A common TCI state indicated to the UE is expected to be common to CCs (cells) (at least QCL type D between CCs). This is due to that simultaneous reception of DL channels/RSs of different types of QCL type D and simultaneous transmission of UL channels/RSs of different spatial relations are not supported in existing specifications (Rel. 15/16) except for a case of transmission/reception using a plurality of TRPs and the like.

In addition, update/activation of a common TCI state ID is studied for provision of common QCL information / common UL transmission spatial filter over a set of a plurality of configured CCs in the unified TCI framework.

As a TCI state pool for CA, options 1 and 2 below are studied.

### {Option 1}

A single TCI state pool configured by RRC may be shared by (configured for) a set of a plurality of configured CCs (cells) / BWPs. For example, a cell group TCI state may be defined, or a TCI state pool for PDSCHs in a reference cell may be reused. With no CC (cell) ID for a QCL type A RS in a TCI state, a CC (cell) ID for a QCL type A RS may be determined according to a target CC (cell) in a TCI state.

In option 1, a common TCI state pool is configured for every plurality of CCs/BWPs. Hence, when one common TCI state is indicated by a MAC CE / DCI, the indicated common TCI state may be applied to all the CCs/BWPs (all the CCs/BWPs included in a CC/BWP list configured in advance).

### [Option 2]

A TCI state pool may be configured by RRC for each individual CC.

In option 2, as in Rel. 16, a CC/BWP application list for simultaneous beam update may be configured by RRC in advance, and when beam update is performed by a MAC CE / DCI in one of the CCs/BWPs included in the CC/BWP list, the update may be applied to all the CCs/BWPs.

In option 1, a common TCI state pool is configured for (shared by) a plurality of CCs by RRC, a TCI state in the common TCI state pool is indicated by a common TCI state ID, and one RS determined based on the TCI state is used to indicate QCL type D over a plurality of configured CCs / a set of the plurality of configured CCs (Restriction 1).

In option 2, a common TCI state pool is individually configured for each CC by RRC, a TCI state in the common state pool is indicated by a common TCI state ID, and one RS determined based on the TCI state is used to indicate QCL type D over a plurality of configured CCs / a set of the plurality of configured CCs (Restriction 2).

### (beam application time (BAT))

For a DCI-based beam indication of Rel. 17, studies 1 and 2 below are studied in relation to a time for application of an indication of a beam / unified TCI state (BAT).

### {Study 1}

It is studied that a first slot to which an indicated TCI is applied is at least Y symbols after the last symbol of an acknowledgement (ACK) for a joint or separate DL/UL beam indication. It is studied that a first slot to which an indicated TCI is applied is at least Y symbols after the last symbol of an ACK / negative acknowledgement (NACK) for a joint or separate DL/UL beam indication. The Y symbols may be configured based on a UE capability by a base station. The UE capability may be reported in units of symbols.

According to study 1, a BAT is determined based on the Y symbols. However, when SCS is different for each of a plurality of CCs, the value of Y symbols is also different, and hence a BAT is different for each of the plurality of CCs.

### {Study 2}

In a case of CA, the time for application of a beam indication may follow any of options 1 to 3 below.
{Option 1} Both the first slot and the Y symbols are determined in a carrier with the smallest SCS of one or more carries to which the beam indication is applied.
{Option 2} Both the first slot and the Y symbols are determined in a carrier with the smallest SCS of one or more carries to which the beam indication is applied and a UL carrier to carry the ACK.
{Option 3} Both the first slot and the Y symbols are determined in a UL carrier to carry the ACK.

As a CC simultaneous beam update function of Rel. 17, it is studied to use a common beam among a plurality of CCs in CA. According to study 2, a BAT is in common among a plurality of CCs.

### (Radio Link Monitoring (RLM))

In NR, radio link monitoring (RLM) is used.

In NR, a base station may configure, for a UE, a radio link monitoring reference signal (RS) (RLM-RS) for each BWP by using higher layer signaling. The UE may receive configuration information for RLM (for example, an RRC "RadioLinkMonitoringConfig" information element).

The configuration information for RLM may include failure detection resource configuration information (for example, a higher layer parameter "failureDetectionResourcesToAddModList"). The failure detection resourse configuration information may include a parameter related to an RLM-RS (for example, a higher layer parameter "RadioLinkMonitoringRS") .

The parameter related to an RLM-RS may include information indicating that the RLM-RS corresponds to a purpose of RLM, an index corresponding to the resource of the RLM-RS (for example, an index included in a higher layer parameter "failureDetectionResources" (RadioLinkMonitoringRS in failureDetectionResourcesToAddModList)), and the like. The index may be an index of a configuration of a CSI-RS (for example, a non-zero power CSI-RS resource ID) or may be an SS/PBCH block index (SSB index), for example. The information of the purpose may indicate beam failure, (cell-level) Radio Link Failure (RLF), or both of these.

The UE may identify the RLM-RS resource, based on the index corresponding to the resource of the RLM-RS and perform RLM by using the RLM-RS resource.

In an RLM procedure of Rel. 16, the UE follows the following implicit RLM-RS determination (implicit RS determination) procedure.

### {Implicit RLM-RS Determination Procedure}

If the UE is not provided with an RLM-RS (RadioLinkMonitoringRS) and also the UE is provided with a TCI state including one or more CSI-RSs for PDCCH reception, the UE follows procedures 1 to 4 below.

### {{Procedure 1}}

If an active TCI state for PDCCH reception includes only one RS, the UE uses the RS provided for the active TCI state for PDCCH reception, for RLM.

### {{Procedure 2}}

If the active TCI state for PDCCH reception includes two RSs, the UE assumes that one of the RSs has QCL type D, and uses the RS having QCL type D, for RLM. The UE does not assume that both of the RSs each have QCL type D.

### {{Procedure 3}}

The UE is not required to use an aperiodic or semi-persistent RS for RLM.

### {{Procedure 4}}

For Lₘₐₓ = 4, the UE selects N_{RLM} RSs provided for active TCI states for PDCCH reception in a plurality of CORESETs associated with the plurality of search space sets in the order starting from one with the shortest monitoring periodicity. If more than one CORESET is associated with a plurality of search space sets having the same monitoring periodicity, the UE determines the order of CORESETs from the one with the highest CORESET index.

Here, Lₘₐₓ denotes the maximum number of SS/PBCH block indices in a cell. The maximum number of SS/PBCH blocks transmitted in a half-frame is Lₘₐₓ.

As described above, when the UE is not provided with an RLM-RS, the UE performs implicit RLM-RS determination and use an active TCI state for PDCCH reception for RLM. When Lₘₐₓ = 4, the UE selects N_{RLM} RSs first in ascending order of monitoring periodicities of search space sets and then in descending order of CORESET indices. The UE selects a CORESET.

The UE can be configured with up to N_{LR-RLM} RLM-RSs for a link recovery procedure and RLM. From N_{LR-RLM} RLM-RSs, N_{RLM} RLM-RSs are used for RLM depending on Lₘₐₓ. In Rel. 16, as shown in FIG. 1, N_{RLM} = 2 when Lₘₐₓ = 4, N_{RLM} = 4 when Lₘₐₓ = 8, and N_{RLM} = 8 when Lₘₐₓ = 64.

### (Beam Failure Detection (BFD) / Beam Failure Recovery (BFR))

For NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

For NR, in order to suppress occurrence of the RLF, a procedure for switching to another beam (which may be referred to as beam recovery (BR), beam failure recovery (BFR), L1/L2 (Layer 1/Layer 2) beam recovery, or the like) in a case where quality of a specific beam deteriorates is implemented. Note that the BFR procedure may be referred to simply as BFR.

Note that beam failure (BF) in the present disclosure may be referred to as link failure.

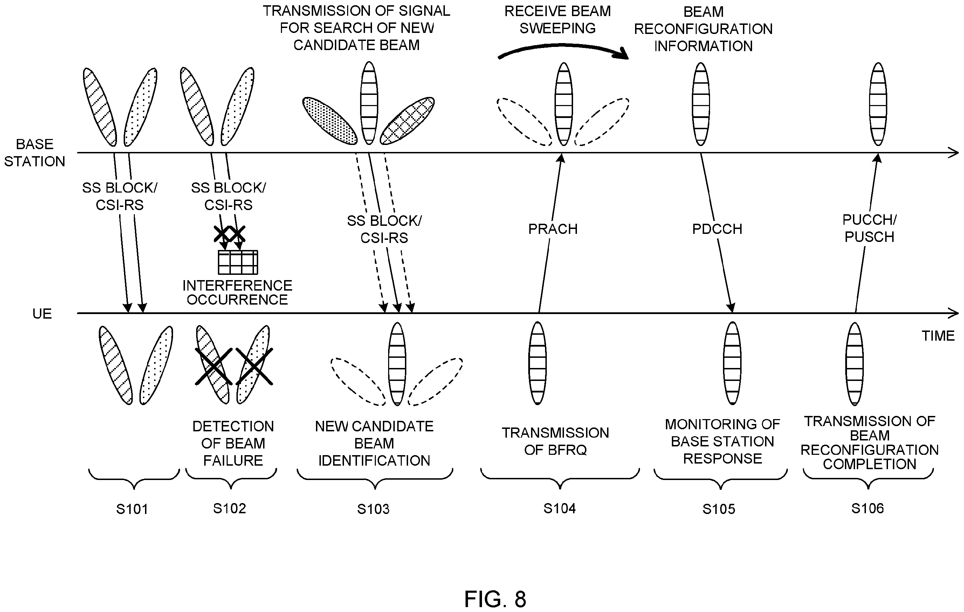

FIG. 8 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS), beam-failure-detection intended RS), an RS to be used for a beam recovery procedure (BFR-RS), and the like.

At step S102, due to interference of radio waves from the base station, the UE cannot detect the BFD-RS (or reception quality of the RS deteriorates). Such interference may occur due to an influence of an obstacle, fading, interference, and the like between the UE and the base station, for example.

The UE detects beam failure when a certain condition is satisfied. For example, the UE may detect occurrence of the beam failure when a BLER (Block Error Rate) with respect to all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). Instead of RS measurement or in addition to RS measurement, beam failure detection may be performed based on a downlink control channel (Physical Downlink Control Channel (PDCCH)) or the like. The BFD-RS may be expected to be quasi-co-located (QCLed) with a DMRS for a PDCCH monitored by the UE.

Here, QCL is an indicator indicating statistical properties of the channel. For example, when a certain signal/channel and another signal/channel are in a relationship of QCL, this may mean that it is assumable that at least one of Doppler shift, a Doppler spread, an average delay, a delay spread, and a spatial parameter (for example, a spatial reception parameter (Spatial Rx Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

A higher layer (for example, the MAC layer) of the UE may start a certain timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, beamFailureInstanceMaxCount configured by RRC) or more until the timer expires.

When there is no notification from the UE or when receiving a certain signal (beam recovery request at step S104) from the UE, the base station may judge that the UE has detected beam failure.

At step S103, for beam recovery, the UE initiates a search for a new candidate beam (candidate beam detection (CBD)) for use in new communication. The UE may select, by measuring a certain RS, the new candidate beam corresponding to the RS. The RS measured at step S103 may be referred to as a new candidate RS, an RS for new candidate beam identification, an NCBI-RS (New Candidate Beam Identification RS), an RS for new beam identification, a new-beam-identification intended RS, an NBI-RS (New Beam Identification RS), a CBI-RS (Candidate Beam Identification RS), a CB-RS (Candidate Beam RS), a candidate beam detection RS (CBD-RS), and the like. The NBI-RS may be the same as the BFD-RS, or may be different from the BFD-RS. Note that the new candidate beam may be referred to simply as a candidate beam or a candidate RS.

The UE may determine a beam corresponding to an RS satisfying a certain condition as the new candidate beam (new beam, q_new). The UE may determine a new candidate beam from among configured NBI-RSs, based on an RS(s) having an L1-RSRP exceeding a threshold value, for example. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NBI-RS (for example, resources, numbers, the number of ports, precoding, and the like for the RS), information related to new beam identification (NBI) (for example, the above-mentioned threshold value), and the like may be configured (notified) for the UE by using higher layer signaling or the like. The information related to the new RS (or the NBI-RS) may be acquired based on information related to a BFD-RS. The information related to the NBI-RS may be referred to as information related to resources for NBI and the like.

Note that the BFD-RS, the NBI-RS, and the like may be interpreted as a radio link monitoring reference signal (Radio Link Monitoring RS (RLM-RS)), and vice versa.

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH, for example.

The BFRQ may include information about the new candidate beam / new candidate RS identified at step S103. Resources for the BFRQ may be associated with the new candidate beam. The information about the beam may be notified by using a beam index (BI), a port index of a certain reference signal, and RS index, a resource index (for example, a CSI-RS resource indicator (CRI)), an SSB resource indicator (SSBRI), or the like.

In Rel-15 NR, CB-BFR (Contention-Based BFR) that is BFR based on collision-based random access (RA) procedure and CF-BFR (Contention-Free BFR) that is BFR based on non-collision based random access procedure are studied. In the CB-BFR and the CF-BFR, the UE may transmit a preamble (also referred to as an RA preamble, a random access channel (Physical Random Access Channel (PRACH)), a RACH preamble, or the like) as the BFRQ by using PRACH resources.

In the CB-BFR, the UE may transmit a preamble randomly selected from one or a plurality of preambles. In contrast, in the CF-BFR, the UE may transmit a preamble assigned by the base station in a UE-specific manner. In the CB-BFR, the base station may assign the same preamble to a plurality of UEs. In the CF-BFR, the base station may assign a preamble in a UE-dedicated manner.

Note that the CB-BFR and the CF-BFR may be referred to respectively as CB PRACH-based BFR (contention-based PRACH-based BFR (CBRA-BFR)) and CF PRACH-based BFR (contention-free PRACH-based BFR (CFRA-BFR)). The CBRA-BFR may be referred to as CBRA for BFR. The CFRA-BFR may be referred to as CFRA for BFR.

In any of the CB-BFR and the CF-BFR, information related to a PRACH resource (RA preamble) may be notified by higher layer signaling (RRC signaling), for example. For example, the information may include information indicating a correspondence between a detected DL-RS (beam) and a PRACH resource, and a different PRACH resource may be associated for each DL-RS.

At step S105, the base station that has detected the BFRQ transmits a response signal (which may be referred to as gNB response and the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) having a cyclic redundancy check (CRC) scrambled with a UE identifier (for example, a cell-radio RNTI (C-RNTI)). The UE may judge at least one of a transmit beam and a receive beam to use, based on the beam reconfiguration information.

The UE may monitor the response signal, based on at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, and the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a certain number of times or a case that a beam failure recovery timer (Beam-failure-recovery-Timer) has expired.

In Rel. 15, performing a beam recovery procedure (for example, notification of BFRQ) for beam failure detected in an SpCell (PCell/PSCell) by using a random access procedure is supported. In contrast, in Rel. 16, performing a beam recovery procedure (for example, notification of BFRQ) for beam failure detected in an SCell by using at least one of transmission of a PUCCH for BFR (for example, a scheduling request (SR)) and transmission of a MAC CE for BFR (for example, UL-SCH) is supported.

For example, the UE may transmit information related to beam failure by using two MAC-CE based steps. The information related to beam failure may include information related to a cell in which beam failure is detected and information related to a new candidate beam (or a new candidate RS index).

### {Step 1}

When BF is detected, PUCCH-BFR (scheduling request (SR)) may be transmitted from the UE to a PCell/PSCell. Subsequently, a UL grant (DCI) for step 2 below may be transmitted from the PCell/PSCell to the UE. When beam failure is detected and a MAC CE (or UL-SCH) for transmitting information related to a new candidate beam is present, step 2 (for example, MAC CE transmission) may be performed with omission of step 1 (for example, PUCCH transmission).

### {Step 2}

Subsequently, the UE may transmit information (for example, a cell index) related to a (failed) cell in which beam failure is detected and information related to a new candidate beam, to the base station (PCell/PSCell) by using a MAC CE via an uplink channel (for example, a PUSCH). Thereafter, a BFR procedure is performed, and a certain period (for example, 28 symbols) after reception of a response signal from the base station, QCL of a PDCCH/PUCCH/PDSCH/PUSCH may be updated to a new beam.

Note that these step numbers are just numbers for description, and a plurality of steps may be combined with each other, or the order of the steps may be changed. Whether to perform the BFR may be configured for the UE by using higher layer signaling.

### (BFD-RS/NBI-RS)

In the BFD, the UE may be configured with an explicit BFD-RS (for example, an SSB/CSI-RS) by higher layer signaling or the like. Alternatively, in BFD, the UE may be configured with an implicit BFD-RS based on the TCI state of a PDCCH/CORESET (the UE may determine a BFD-RS based on the TCI state). In the BFR, the UE may be configured with an explicit NBI-RS (for example, an SSB/CSI-RS) by higher layer signaling or the like. The explicit BFD-RS, the implicit BFD-RS, the explicit NBI-RS, and the like will be described below concretely.

In Rel. 16, a UE can be provided, for each BWP of one serving cell, with a set qo-bar of periodic (P)-CSI-RS resource configuration indices by a failure detection resource list (failureDetectionResourcesToAddModList) for radio link quality measurement in the BWP in the serving cell. The UE can be provided, for each BWP of one serving cell, with a set qi-bar of at least one of P-CSI-RS resource configuration indices and SS/PBCH block indices by a candidate beam RS list (candidateBeamRSList), an extended candidate beam RS list (candidateBeamRSListExt), or a list of candidate beam RSs for SCell (candidateBeamRSSCellList) for radio link quality measurement in the BWP in the serving cell.

q₀-bar corresponds to a representation of "q₀" with an overline. In the following, q₀-bar is represented simply as q₀. q₁-bar corresponds to a representation of "q₁" with an overline. In the following, qi-bar is represented simply as q₁.

The set q₀ of P-CSI-RS resources provided by the failure detection resources may be referred to as explicit BFD-RSs. The set q₁ may be referred to as an explicit New Beam Identification (NBI)-RS.

In other words, the UE can be explicitly configured with a BFD-RS set q₀ for BFR for each cell.

The UE may use an RS resource corresponding to an index included in at least one set of the set qo and the set q₁ to perform L1-RSRP measurement and the like, to detect beam failure.

Note that, in the present disclosure, the above-described higher layer parameter indicating information of indices corresponding to resources for BFD being provided may be interpreted as resources for BFD being configured, BFD-RSs being configured, and the like, and vice versa. In the present disclosure, resources for BFD, periodic CSI-RS resource configuration indices or the set q₀ of SSB indices, and BFD-RSs may be interchangeably interpreted.

If the UE is not provided with qo by failure detection resources (failureDetectionResources) for one BWP in the serving cell, the UE determines to include, in the set qo, P-CSI-RS resource configuration indices having the same values as those of the RS indices in the RS set indicated by a TCI state (TCI-State) for the corresponding CORESET to be used by the UE for monitoring of a PDCCH. If two RS indices are present in one TCI state, the set qo includes RS indices with a QCL type D configuration for the corresponding TCI state. The UE assumes that the set qo includes up to two RS indices. The UE assumes single-port RSs in the set q₀.

This set qo may be referred to as implicit BFD RSs.

The physical layer in the UE assesses radio link quality according to the set q₀ of resource configurations, for a threshold value Q_{out,LR}. For the set q₀, the UE assesses radio link quality according only to an SS/PBCH block in the PCell or PSCell quasi-co-located (quasi co-located) with a DM-RS of PDCCH reception monitored by the UE or a P-CSI-RS resource configuration quasi-co-located with the DM-RS of the PDCCH reception monitored by the UE.

In other words, for the set qo, the UE assesses radio link quality according to a BFD-RS QCLed with a DMRS of a PDCCH/CORESET.

### (Per-cell BFR and Per-TRP BFR)

The (Rel-15/16) BFR described above is performed for each cell and may hence be referred to as per-cell BFR. In contrast to this, BFR performed for each TRP is studied.

It is studied to configure a new RRC configuration parameter (for example, a TRP-ID, a group ID, a new ID, or the like) for single-DCI-based multi-TRP. The new RRC configuration parameter may follow one of options 1 and 2 below.

### {Option 1}

Each CORESET is associated with a new ID. When two sets of BFD-RSs for per-TRP BFR are configured by a higher layer, CORESETs QCLed with the BFD-RSs in one set may be associated with the same new ID while CORESETs QCLed with the BFD-RSs in a different set may be associated with different new IDs.

### [Option 2]

Each TCI state is associated with a new ID. When two sets of BFD-RSs for per-TRP BFR are configured by a higher layer, TCI states / CORESETs QCLed with the BFD-RSs in one set may be associated with the same new ID while TCI states / CORESETs QCLed with the BFD-RSs in a different set may be associated with different new IDs.

An explicit BFD-RS set configuration taking account of a CORESET using at least one of two TCI states and single-DCI-based multi-TRP has not been studied sufficiently.

For the explicit BFD-RS set configuration, cases #1 to #5 below are considered.

### {Case #1}

In single-cell/single-TRP operation, one BFD-RS set is configured for per-cell BFR in a case of using an SFN CORESET with two TCI states.

### {Case #2}

In single-DCI-based multi-TRP operation, one BFD-RS set is configured for per-cell BFR in a case where all the CORESETs each have one TCI state.

### {Case #3}

In single-DCI-based multi-TRP operation, up to two BFD-RS sets are configured for per-TRP BFR in a case where all the CORESETs each have one TCI state.

### {Case #4}

In single-DCI-based multi-TRP operation, one BFD-RS set is configured for per-cell BFR in a case of using an SFN CORESET with two TCI states.

### {Case #5}

In single-DCI-based multi-TRP operation, up to two BFD-RS sets are configured for per-TRP BFR in a case of using an SFN CORESET with two TCI states.

It is studied that SFN PDCCH scheme 1 includes HST and URLLC. In the present disclosure, SFN PDCCH scheme 1, an SFN PDCCH scheme, an SFN PDCCH, and a TRP-based pre-compensation scheme may be interchangeably interpreted.

For an implicit BFD-RS, the SFN PDCCH scheme may include both one TCI state and two TCI states. It is studied that, if the SFN PDCCH scheme is configured and also two TCI states are activated for at least one CORESET, an RS for CORESETs with one TCI state and two TCI states are used for an implicit configuration of an RS for BFD.

### (Transmission Power Control)

### <PUSCH Transmission Power Control>

In NR, the transmission power of a PUSCH is controlled based on a TPC command (also referred to as a value, an increase/decrease value, a correction value, and the like) indicated by a value in a field (also referred to as a TPC command field and the like) in DCI.

For example, when the UE transmits a PUSCH in an active UL BWP b of a carrier f in a serving cell c by using a parameter set (open-loop parameter set) with an index j and an index 1 of a power control adjustment state (PUSCH power control adjustment state), the transmission power of the PUSCH (P_{PUSCH,b,f,c}(i,j,q_{d},l)) [dBm] in a PUSCH transmission occasion (also referred to as a transmission period and the like) i may be based on at least one of P_{CMAX,f,c(i)}, P_{O_PUSCH,b,f,c}(j), M^{PUSCH}_{RB,b,f,c}(i), α_{b,f,c}(j), PL_{b,f,c}(q_{d}), and Δ_{TF,b,f,c}(i), f_{b,f,c}(i,l).

The power control adjustment state may be referred to as a closed loop (CL)-power control (PC) state, a value based on a TPC command of the power control adjustment state index l, a TPC command accumulation value, and a value by closed-loop. 1 may be referred to as a closed-loop index.

The PUSCH transmission occasion i is a period in which a PUSCH is transmitted and may be constituted of one or more symbols, one or more slots, or the like, for example.

P_{CMAX,f,c(i)} denotes the transmission power of user terminals (also referred to as maximum transmission power, UE maximum output power, and the like) configured for the carrier f in the serving cell c in the transmission occasion i, for example.

P_{O_PUSCH,b,f,c}(j) denotes a parameter according to a target received power configured for the active UL BWP b of the carrier f in the serving cell c in the transmission occasion i (also referred to as a parameter related to a transmission power offset, a transmission power offset P0, a target received power parameter, and the like, for example), for example. P_{O_UE_PUSCH,b,f,c}(j) may denote the total of P_{O_NOMINAL_PUSCH,f,c}(j) and P_{O_UE_PUSCH,b,f,c} (j).

M^{PUSCH}_{RB,b,f,c}(i) denotes the number of resource blocks (bandwidth) allocated to a PUSCH for the transmission occasion i in the active UL BWP b of the carrier f in the serving cell c and subcarrier spacing µ, for example. α_{b,f,c}(j) denotes a value provided by a higher layer parameter (referred to also as msg3-Alpha,p0-PUSCH-Alpha, fractional factor, and the like, for example).

PL_{b,f,c}(q_{d}) denotes pathloss (pathloss estimation [dB], pathloss compensation) calculated in a user terminal by using the index q_{d} of a reference signal (RS, pathloss reference RS, pathloss (PL)-RS, RS for pathloss reference, DL-RS for pathloss measurement, PUSCH-PathlossReferenceRS) for downlink BWP associated with the active UL BWP b of the carrier f in the serving cell c, for examples.

When the UE is not provided with a pathloss reference RS (for example, PUSCH-PathlossReferenceRS) or when the UE is not provided with a dedicated higher layer parameter, the UE may calculate PL_{b,f,c}(q_{d}) by using an RS resource from a synchronization signal (SS) / physical broadcast channel (PBCH) block (SS block (SSB)) used to obtain a Master Information Block (MIB).

When the UE is configured with RS resource indices the number of which is up to the value of the maximum number of pathloss reference RSs (for example, maxNrofPUSCH-PathlossReferenceRSs) and a set of RS configurations corresponding to the respective RS resource indices by pathloss reference RSs, the set of RS resource indices may include one of or both a set of SS/PBCH block indices and a set of channel state information (CSI)-reference signal (RS) resource indices. The UE may identify the RS resource index q_{d} in the set of RS resource indices.

When PUSCH transmission is scheduled by a Random Access Response (RAR) UL grant, the UE may use the same RS resource index q_{d} as that for corresponding PRACH transmission.

When the UE is provided with a configuration of power control for a PUSCH by a sounding reference signal (SRS) resource indicator (SRI) (for example, SRI-PUSCH-PowerControl) and is provided with one or more values of pathloss reference RS IDs, the UE may obtain mapping between a set of values for an SRI field in DCI format 0_1 and a set of pathloss reference RS ID values from higher layer signaling (for example, sri-PUSCH-PowerControl-Id in SRI-PUSCH-PowerControl). The UE may determine the RS resource index q_{d} from the ID of a pathloss reference RS mapped to the SRI field value in DCI format 0_1 for scheduling the PUSCH.

When the PUSCH transmission is scheduled by DCI format 0_0 and the UE is not provided with PUCCH spatial relation information for the PUCCH resource with the lowest index for the active UL BWP b of each carrier f and the serving cell c, the UE may use the same RS resource index q_{d} as that of PUCCH transmission in the PUCCH resource.

When the PUSCH transmission is scheduled by DCI format 0_0 and the UE is not provided with spatial setting of PUCCH transmission, when the PUSCH transmission is scheduled by DCI format 0_1 not including an SRI field, or when the UE is not provided with the configuration of power control for the PUSCH by the SRI, the UE may use the RS resource index q_{d} with a pathloss reference RS ID of zero.

When a configured grant configuration (for example, ConfiguredGrantConfig) includes a specific parameter (for example, rrc-ConfiguredUplinkGrant) for PUSCH transmission configured by the configured grant configuration, the RS resource index q_{d} may be provided to the UE by a pathloss reference index (for example, pathlossReferenceIndex) in the specific parameter.

When the configured grant configuration does not include the specific parameter for the PUSCH transmission configured by the configured grant configuration, the UE may determine the RS resource index q_{d} from the value of the ID of a pathloss reference RS mapped to the SRI field value in the DCI format for activating the PUSCH transmission. When the DCI format does not include an SRI field, the UE may determine the RS resource index q_{d} with a pathloss reference RS ID of zero.

Δ_{TF,b,f,c}(i) denotes a transmission power adjustment component (offset, transmission format compensation) for the UL BWP b of the carrier f in the serving cell c.

f_{b,f,c}(i,l) denotes a PUSCH power control adjustment state for the active UL BWP b of the carrier f in the serving cell c in the transmission occasion i. f_{b,f,c}(i,l) may be based on δ_{PUSCH,b,f,c}(i,l).

When TPC accumulation is enabled, f_{b,f,c}(i,l) may be based on the accumulation value of δ_{PUSCH,b,f,c}(m,l).

When TPC accumulation is disabled, f_{b,f,c}(i,l) may be based on δ_{PUSCH,b,f,c}(i,l) (absolute value).

When information indicating disabling of the TPC accumulation (TPC-Accumulation) is not configured (when information indicating disabling of the TPC accumulation is not provided, when the TPC accumulation is configured at enabled), the UE accumulates TPC command values and determines transmission power, based on the result of the accumulation (power control state) (applies the TPC command values via the accumulation).

When the information indicating disabling of the TPC accumulation (TPC-Accumulation) is configured (when the information indicating disabling of the TPC accumulation is provided, when the TPC accumulation is configured at disabled), the UE does not accumulate TPC command values but determines transmission power, based on the TPC command values (power control states) (applies the TPC command values without accumulation).

δ_{PUSCH,b,f,c}(i,l) may denote a TPC command value included in DCI format 0_0 or DCI format 0_1 for scheduling the PUSCH transmission occasion i in the active UL BWP b of the carrier f in the serving cell c or a TPC command value coded by being combined with another TPC command in DCI format 2_2 with a CRC scrambled with a specific RNTI (Radio Network Temporary Identifier) (for example, TPC-PUSCH-RNTI).

Σ_{m = 0}^{C(Di) - 1}δ_{PUCCH,b,f,c}(m, l) may denote the total of TPC command values in a set Dᵢ of the TPC command values with cardinality C(Dᵢ). Dᵢ may denote a set of TPC command values received by the UE between (K_{PUSCH}(i - io) - 1) symbols before a PUSCH transmission occasion i - i₀ and K_{PUSCH}(i) symbols before the PUSCH transmission occasion i in the active UL BWP b of the carrier f in the serving cell c for the PUSCH power control adjustment state 1. io may be the smallest positive integer that enables (K_{PUSCH}(i - i₀)) symbols before the PUSCH transmission occasion i - i₀ to be earlier than K_{PUSCH}(i) symbols before the PUSCH transmission occasion i.

If the PUSCH transmission is scheduled by DCI format 0_0 or DCI format 0_1, K_{PUSCH}(i) may denote the number of symbols in the active UL BWP b of the carrier f in the serving cell c after the last symbol of corresponding PDCCH reception and also before the first symbol of the PUSCH transmission. If the PUSCH transmission is configured by configured grant configuration information (ConfiguredGrantConfig), K_{PUSCH}(i) may denote the number of K_{PUSCH,min} symbols equal to the product of the number N_{symb}^{slot} of symbols per slot in the active UL BWP b of the carrier f in the serving cell c and the smallest value of values provided by k2 in PUSCH-common configuration information (PUSCH-ConfigCommon).

Whether the power control adjustment state includes a plurality of states (for example, two states) or include a single state may be configured by a higher layer parameter. When a plurality of power control adjustment states are configured, one of the plurality of power control adjustment states may be identified by the index 1 (for example, 1 ∈ {0, 1}).

### <PUCCH Transmission Power Control>

In NR, the transmission power of a PUCCH is controlled based on a TPC command (also referred to as a value, an increase/decrease value, a correction value, an indication value, and the like) indicated by a value in a field (also referred to as a TPC command field, a first field, and the like) in DCI.

For example, the transmission power of a PUCCH (P_{PUCCH,b,f,c}(i,qᵤ,q_{d},l)) [dBm] in a PUCCH transmission occasion (also referred to as a transmission period and the like) i for the active UL BWP b of the carrier f in the serving cell c may be based on at least one of P_{CMAx,f,c}(i), P_{O_PUCCH,b,f,c}(qᵤ), M^{PUCCH}_{RB,b,f,c(i)}, PL_{b,f,c}(q_{d}),Δ_{F_PUCCH}(F), Δ_{TF,b,f,c}(i), and g_{b,f,c}(i,l), by using the index 1 of a power control adjustment state (PUCCH power control adjustment state).

The PUCCH transmission occasion i is a period in which a PUCCH is transmitted and may be constituted of one or more symbols, one or more slots, or the like, for example.

P_{CMAX,f,c}(i) denotes the transmission power of user terminals (maximum transmission power, UE maximum output power, and the like) configured for the carrier f in the serving cell c in the transmission occasion i, for example. P_{O_PUCCH,b,f,c}(qᵤ) denotes a parameter according to a target received power configured for the active UL BWP b of the carrier f in the serving cell c in the transmission occasion i (also referred to as a parameter related to a transmission power offset, a transmission power offset P0, a target received power parameter, or the like, for example), for example.

M^{PUCCH}_{RB,b,f,c}(i) denotes the number of resource blocks (bandwidth) allocated to a PUCCH for the transmission occasion i in the active UL BWP b of the carrier f in the serving cell c and subcarrier spacing µ, for example. PL_{b,f,c}(q_{d}) denotes pathloss (pathloss estimation [dB], pathloss compensation) calculated in a user terminal by using the index q_{d} of a reference signal (pathloss reference RS, pathloss (PL)-RS, RS for pathloss reference, DL-RS for pathloss measurement, PUCCH-PathlossReferenceRS) for downlink BWP associated with the active UL BWP b of the carrier f in the serving cell c, for example.

If the UE is not provided with pathloss reference RSs (pathlossReferenceRSs) or before the UE is provided with a dedicated higher layer parameter, the UE may calculate the pathloss PL_{b,f,c}(q_{d}) by using an RS resource obtained from an SS/PBCH block used by the UE to acquire an MIB.

If the UE is provided with pathloss reference RS information (pathlossReferenceRS in PUCCH power control information (PUCCH-PowerControl)) and is not provided with PUCCH spatial relation information (PUCCH-SpatialRelationInfo), the UE acquires a value of a reference signal (referencesignal) in a pathloss reference RS for PUCCH from a pathloss reference RS-ID for PUCCH (PUCCH-PathlossReferenceRS-Id) with an index of 0 in pathloss reference RS information for PUCCH (PUCCH-PathlossReferenceRS). The resources of this reference signal are in the same serving cell or in a serving cell indicated by a value of pathloss reference linking information (pathlossReferenceLinking) if provided. The pathloss reference linking information indicates whether the UE applies DL of a special cell (SpCell) or the secondary cell (SCell) corresponding to this UL as pathloss reference. The SpCell may be a primary cell (PCell) in a master cell group (MCG) or may be a primary secondary cell (PSCell) in a secondary cell group (SCG). The pathloss reference RS information indicates a set of reference signals (for example, CSI-RS configurations or SS/PBCH blocks) used for PUCCH pathloss estimation.

Δ_{F_PUCCH}(F) is a higher layer parameter provided for each PUCCH format. Δ_{TF,b,f,c}(i) denotes a transmission power adjustment component (offset) for the UL BWP b of the carrier f in the serving cell c.

g_{b,f,c}(i,l) denotes a value based on a TPC command of the power control adjustment state index 1 of the active UL BWP of the carrier f in the serving cell c and the transmission occasion i (for example, a power control adjustment state, a TPC command accumulation value, a value by closed-loop, or PUCCH power adjustment state). For example, g_{b,f,c}(i,l) may be based on, δ_{PUCCH,b,f,c}(i,1) .

When TPC accumulation is enabled, g_{b,f,c}(i,l) may be based on the accumulation value of δ_{PUCCH,b,f,c}(i,1) .

When TPC accumulation is disabled, g_{b,f,c}(i,l) may be based on δ_{PUCCH,b,f,c}(i,l) (absolute value).

Here, δ_{PUCCH,b,f,c}(i,1) denotes a TPC command value, and may be coded by being included in DCI format 1_0 or DCI format 1_1 detected by the UE in the PUCCH transmission occasion i in the active UL BWP b of the carrier f in the serving cell c or combined with another TPC command in DCI format 2_2 with a CRC scrambled with a specific RNTI (Radio Network Temporary Identifier) (for example, TPC-PUSCH-RNTI).

Σ_{m = 0}^{C(Ci)} - ¹δ_{PUSCH,b,f,c}(m, 1) may denote the total of TPC command values in a set Cᵢ of the TPC command values with cardinality C(Ci). Cᵢ may denote a set of TPC command values received by the UE between (K_{PUCCH}(i - io) - 1) symbols before a PUCCH transmission occasion i - i₀ and K_{PUCCH}(i) symbols before the PUCCH transmission occasion i in the active UL BWP b of the carrier f in the serving cell c for the PUSCH power control adjustment state 1. io may be the smallest positive integer that enables (K_{PUCCH}(i - i₀)) symbols before the PUSCH transmission occasion i - i₀ to be earlier than K_{PUCCH}(i) symbols before the PUSCH transmission occasion i.

If the PUCCH transmission corresponds to detection of DCI format 1_0 or DCI format 1_1 by the UE, K_{PUCCH}(i) may denote the number of symbols in the active UL BWP b of the carrier f in the serving cell c after the last symbol of corresponding PDCCH reception and also before the first symbol of the PUCCH transmission. If the PUCCH transmission is configured by configured grant configuration information (ConfiguredGrantConfig), K_{PUSCH}(i) may denote the number of K_{PUCCH,min} symbols equal to the product of the number N_{symb}^{slot} of symbols per slot in the active UL BWP b of the carrier f in the serving cell c and the smallest value of values provided by k2 in PUSCH-common configuration information (PUSCH-ConfigCommon).

If the UE is provided with information indicating use of two PUCCH power control adjustment states (twoPUCCH-PC-AdjustmentStates) and PUCCH spatial relation information (PUCCH-SpatialRelationInfo), 1 = {0, 1} holds, and if the UE is not provided with the information indicating use of two power control adjustment states for PUCCH or the spatial relation information for PUCCH, l = 0 may hold.

If the UE is provided with a TPC command value from DCI format 1_0 or 1_1 or if the UE is provided with the PUCCH spatial relation information, the UE may obtain mapping between a PUCCH spatial relation information ID (pucch-SpatialRelationInfoId) value and a closed-loop index (closedLoopIndex, power adjustment state index 1) by an index provided by a P0 ID for PUCCH (p0-PUCCH-Id in p0-Set in PUCCH-PowerControl in PUCCH-Config). When the UE receives an activation command including the value of the PUCCH spatial relation information ID, the UE may determine the value of the closed-loop index providing the value 1 via a link to a corresponding P0 ID for PUCCH.

If the UE is provided with a configuration of P_{O_PUCCH,b,f,c} (qᵤ) value for the corresponding PUCCH power adjustment state 1 for the active UL BWP b of the carrier f in the serving cell c by a higher layer, g_{b,f,c}(i,l) = 0 and k = 0, 1, ..., i hold. If the UE is provided with the PUCCH spatial relation information, the UE may determine the value 1 from the value qᵤ, based on the PUCCH spatial relation information associated with a P0 ID for PUCCH corresponding to qᵤ and a closed-loop index value corresponding to l.

qᵤ may denote a P0 ID for PUCCH (p0-PUCCH-Id) indicating P0 for PUCCH (P0-PUCCH) in a P0 set (p0-Set) for PUCCH (p0-PUCCH-Id).

If the UE is not provided with the PUCCH spatial relation information (PUCCH-SpatialRelationInfo), the UE obtains a value of P0 for PUCCH (p0-PUCCH-Value) from the value of PO-ID for PUCCH (p0-PUCCH-Id) equal to the smallest value of the PO-ID for PUCCH in the P0 set (p0-Set).

If the UE is provided with pathloss reference RSs (pathlossReferenceRSs) and is not provided with PUCCH spatial relation information (PUCCH-SpatialRelationInfo), the UE obtains a reference signal (referenceSignal) in a PUCCH pathloss reference RS from a PUCCH pathloss reference RS-ID (pucch-PathlossReferenceRS-Id) with an index of 0 in PUCCH pathloss reference RS (PUCCH-PathlossReferenceRS). Obtained RS resources are in a primary cell or, if pathloss reference linking (pathlossReferenceLinking) is provided, in a serving cell indicated by the value of the pathloss reference linking.

If the UE is provided with the number of PUCCH power control adjustment states maintained by the UE being two (twoPUCCH-PC-AdjustmentStates) and the PUCCH spatial relation information, PUCCH power control adjustment state (closed-loop) index 1 ∈ {0, 1}. If the UE is not provided with the number of PUCCH power control adjustment states maintained by the UE being two or the PUCCH spatial relation information, PUCCH power control adjustment state (closed-loop) index 1 = 0.

In other words, if the UE is not provided with the PUCCH spatial relation information, the P0, the PL-RS, and the closed-loop index are determined according to a rule. In this case, the lowest PO-ID for PUCCH is applied, PUCCH pathloss reference RS-ID = 0 is applied, and 1 = 0 is applied.

In an RRC information element (IE), the PUCCH power control information element (PUCCH-PowerControl) includes a P0 set (p0-Set), which is a set of P0 for PUCCH (P0-PUCCH), and pathloss reference RSs (pathlossReferenceRSs), which is a set of PUCCH pathloss reference RSs (PUCCH-PathlossReferenceRS). The P0 for PUCCH includes the PO-ID for PUCCH (P0-PUCCH-Id) and the P0 value for PUCCH (p0-PUCCH-Value). The PUCCH pathloss reference RS includes the PUCCH pathloss reference RS-ID (PUCCH-PathlossReferenceRS-Id) and a reference signal (referenceSignal, SSB index, or NZP-CSI-RS resource ID).

### <SRS Transmission Power Control>

For example, the transmission power of an SRS (P_{SRS,b,f,c}(i,qₛ,l)) in the SRS transmission occasion (also referred to as a transmission period and the like) i for the active UL BWP b of the carrier f in the serving cell c may be based on at least one of P_{CMAX,f,c}(i), P_{O_SRS,b,f,c}(qₛ), M_{SRS,b,f,c}(i), α_{SRS,b,f,c}(qₛ), PL_{b,f,c}(q_{d}), and h_{b,f,c}(i,l), by using the index 1 of a power control adjustment state.

The SRS transmission occasion i is a period in which an SRS is transmitted and may be constituted of one or more symbols, one or more slots, or the like, for example.

Here, P_{CMAX,f,c}(i) denotes the UE maximum transmission power for the carrier f in the serving cell c in the SRS transmission occasion i, for example. P_{O_SRS,b,f,c}(qₛ)denotes a parameter according to a target received power provided by p0 for the active UL BWP b of the carrier f in the serving cell c and an SRS resource set qₛ (provided by SRS-ResourceSet and SRS-ResourceSetId) (for example, a parameter related to a transmission power offset, a transmission power offset P0, a target received power parameter, or the like).

M_{SRS,b,f,c}(i) denotes an SRS bandwidth expressed by the number of resource blocks for the SRS transmission occasion i in the active UL BWP b of the carrier f in the serving cell c and subcarrier spacing µ.

α_{SRS,b,f,c}(qₛ) is provided by α (for example, alpha) for the active UL BWP b of the carrier f in the serving cell c and the subcarrier spacing µ and the SRS resource set qₛ.

PL_{b,f,c}(q_{d}) denotes a DL pathloss estimation value [dB] (pathloss estimation [dB], pathloss compensation) calculated by the UE by using the RS resource index q_{d} for the active DL BWP of the serving cell c and the SRS resource set qₛ. The RS resource index q_{d} is a pathloss resource RS (RS for pathloss reference, pathloss (PL)-RS, DL-RS for pathloss measurement, for example, provided by pathlossReferenceRS) associated with the SRS resource set qₛ and is an SS/PBCH block index (for example, ssb-Index) or a CSI-RS resource index (for example, csi-RS-Index).

If the UE is not provided with pathloss reference RSs (pathlossReferenceRSs) or before the UE is provided with a dedicated higher layer parameter, the UE may calculate PL_{b,f,c}(q_{d}) by using an RS resource obtained from an SS/PBCH block used by the UE to acquire an MIB.

h_{b,f,c}(i,l) denotes an SRS power control adjustment state for the active UL BWP b of the carrier f in the serving cell c in the SRS transmission occasion i. When the configuration of SRS power control adjustment states (for example, srs-PowerControlAdjustmentStates) indicates the same power control adjustment state for SRS transmission and PUSCH transmission, this corresponds to the current PUSCH power control adjustment state f_{b,f,c}(i,l). In contrast, when the configuration of SRS power control adjustment states indicates an independent power control adjustment state for each of SRS transmission and PUSCH transmission, the SRS power control adjustment state h_{b,f,c}(i) may be based on δ_{SRS,b,f,c}(m).

When TPC accumulation is enabled, h_{b,f,c}(i) may be based on the accumulation value of δ_{SRS,b,f,c}(m) .

When TPC accumulation is disabled, h_{b,f,c}(i) may be based on δ_{SRS,b,f,c}(i) (absolute value).

Here, δ_{SRS,b,f,c}(m) may denote a TPC command value coded by being combined with another TPC command in a PDCCH with DCI (for example, DCI format 2_3). Σ_{m = 0}^{C(Si) - 1}δ_{SRS,b,f,c}(m) may denote the total of the TPC commands in the set Sᵢ of TPC commands with cardinality C(Sᵢ) received by the UE between (K_{SRS}(i - i₀) - 1) symbols before the SRS transmission occasion i - io and K_{SRS}(i) symbols before the SRS transmission occasion i in the active UL BWP b of the carrier f in the serving cell c and the subcarrier spacing µ. Here, io may be the smallest positive integer that enables (K_{SRS}(i - i₀) - 1) symbols before the SRS transmission occasion i - io to be earlier than K_{SRS}(i) symbols before the SRS transmission occasion i.

If the SRS transmission is aperiodic, K_{SRS}(i) may denote the number of symbols in the active UL BWP b of the carrier f in the serving cell c after the last symbol of a corresponding PDCCH triggering the SRS transmission and also before the first symbol of the SRS transmission. If the SRS transmission is semi-persistent or periodic, K_{SRS}(i) may denote the number of K_{SRS,min} symbols equal to the product of the number N_{symb}^{slot} of symbols per slot in the active UL BWP b of the carrier f in the serving cell c and the smallest value of values provided by k2 in PUSCH-common configuration information (PUSCH-ConfigCommon).

### (QCL Rule)

A unified TCI state of Rel. 17 (indicated/updated by a MAC CE / DCI of Rel. 17) may be shared but need not be shared with UE-dedicated reception in a PDSCH/PDCCH.

A QCL rule for a unified TCI state of Rel. 17 may be different depending on whether the unified TCI state of Rel. 17 is shared with UE-dedicated reception in a PDSCH/PDCCH. For example, all the QCL rules defined in existing specifications (options B1 to B3 to be described later) may be supported for a DL channel/RS not sharing the same Rel-17 unified TCI state as that of the UE-dedicated reception in the PDSCH/PDCCH. For example, at least one QCL rule in options A1 and A2 below may be supported regarding source RS and QCL type, for a DL channel/RS sharing the same Rel-17 unified TCI state as that of the UE-dedicated reception in the PDSCH/PDCCH.

### {Option A1}

A tracking RS (TRS) is configured for source RS of QCL type A, and a CSI-RS for beam management (BM) (CSI-RS with repetition) is configured for QCL type D source RS.

### {Option A2}

A TRS is configured for source RS of QCL type A and source RS for QCL type D.

QCL rules are defined in existing specifications. For example, for PDSCH/PDCCH, options B1 to B3 below are permitted.

### {Option B1}

A QCL type A RS is a TRS (CSI-RS with TRS information (trs-Info)), and a type D RS is a CSI-RS with repetition (CSI-RS for BM).

### {Option B2}

A QCL type A RS is a TRS (CSI-RS with trs-Info), and a type D RS is the same as the QCL type A RS.

### {Option B3}

A QCL type A RS is a CSI-RS without trs-Info and without repetition, and a type D RS is the same as the QCL type A RS.

For a CSI-RS resource in a non-zero power (NZP)-CSI-RS resource set (NZP-CSI-RS-ResourceSet) configured without trs-info and without repetition, the UE assumes that a TCI state (TCI-State) indicates one of one or more QCL types below.
- Type A with a CSI-RS resource in an NZP-CSI-RS resource set configured with trs-Info, and type D with the same CSI-RS resource if applicable.
- Type A with a CSI-RS resource in an NZP-CSI-RS resource set configured with trs-Info, and type D with an SS/PBCH block if applicable.
- Type A with a CSI-RS resource in an NZP-CSI-RS resource set configured with trs-Info, and type D with a CSI-RS resource in an NZP-CSI-RS resource set configured with repetition if applicable.
- If type D is not applicable, type B with a CSI-RS resource in an NZP-CSI-RS resource set configured with trs-Info.

An explicit RRC parameter for indicating whether the unified TCI state of Rel. 17 is shared with UE-dedicated reception in a PDSCH/PDCCH or a dynamic grant / configured grant PUSCH and a dedicated PUCCH resource may be defined.

However, it is not clear how to indicate whether the unified TCI state is shared with UE-dedicated reception in a PDSCH/PDCCH or a dynamic grant / configured grant PUSCH and a dedicated PUCCH resource. Unless such an indication method is clear, reduction in throughput / degradation in communication quality may occur.

Thus, the inventors of the present invention came up with the idea of an indication method related to sharing of a TCI state.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a common beam, common TCI, a common TCI state, a TCI state of Rel. 17, a TCI state of Rel. 17 or later versions, unified TCI, a unified TCI state, a TCI state applied to a plurality of types of channels/RSs, a TCI state applied to a plurality of (plurality of types of) channels/RSs, a TCI state applicable to a plurality of types of channels/RSs, a TCI state for a plurality of types of signals, a TCI state for a plurality of types of channels/RSs, a TCI state, a unified TCI state, UL and DL TCI states for joint TCI indication, a TCI state for UL only for separate TCI indication, a TCI state for DL only for separate TCI indication, a joint TCI state for DL and UL, and a separate TCI state for each of DL and UL may be interchangeably interpreted.

In the present disclosure, a TCI state of Rel. 15/16, TCI state / spatial relation applied only to a specific channel/RS, and a TCI state / spatial relation applied to one type of channel/RS may be interchangeably interpreted.

In the present disclosure, a plurality of TCI states configured by an RRC IE, a plurality of TCI states activated by a MAC CE, information related to one or more TCI states, a TCI state configuration, a TCI state pool, an active TCI state pool, a common TCI state pool, a unified TCI state pool, a TCI state list, a unified TCI state list, a joint TCI state pool, a separate TCI state pool, a separate TCI state pool, a separate DL/UL TCI state pool, a DL TCI state pool, a UL TCI state pool, a separate DL TCI state pool, and a separate UL TCI state pool may be interchangeably interpreted.

In the present disclosure, DL TCI, DL only TCI, separate DL only TCI, DL common TCI, DL unified TCI, common TCI, and unified TCI may be interchangeably interpreted. In the present disclosure, UL TCI, UL only TCI, separate UL only TCI, UL common TCI, UL unified TCI, common TCI, and unified TCI may be interchangeably interpreted.

In the present disclosure, a channel/RS to which a unified TCI is applied may be a PDSCH/PDCCH/CSI-RS/PUSCH/PUCCH/SRS.

In the present disclosure, a BWP, a CC (cell), and a CC (cell) / BWP may be interchangeably interpreted.

### (Radio Communication Method)

In each embodiment, a TCI state of Rel. 17 / unified TCI state is referred to simply as a TCI state in some cases. In each embodiment, a TCI state of Rel. 17 / unified TCI state is referred to as a TCI state of Rel. 17 / unified TCI state in some cases when it is necessary to differentiate a TCI state of Rel. 17 / unified TCI state from a TCI state of Rel. 15/16.

In each embodiment, a target channel may be at least one of UE-dedicate reception in a PDSCH/PDCCH and a dynamic grant / configured grant PUSCH and a dedicated PUCCH resource, may be at least one of UE-dedicated reception in a PDSCH/PDCCH and a dynamic grant/configured grant PUSCH and all the dedicated PUCCH resources, may be a UE-dedicated channel / UE-dedicated reception / UE-dedicated transmission / UE-dedicated RS / UE-dedicated channel resource, or may be a channel/RS to which a unified TCI state is applied.

In the present disclosure, UE-dedicated reception in a PDSCH/PDCCH, reception of a PDSCH/PDCCH configured by a PDSCH configuration (PDSCH-Config) / PDCCH configuration (PDCCH-Config), a UE-dedicated PDSCH/PDCCH, and a UE-dedicated PDSCH/PDCCH resource may be interchangeably interpreted. In the present disclosure, a dynamic grant / configured grant PUSCH, a PUSCH configured by PUSCH configuration (PUSCH-Config) / configured grant configuration (ConfiguredGrantConfig), a UE-dedicated PUSCH, and a UE-dedicated PUSCH resource may be interchangeably interpreted. In the present disclosure, a dedicated PUCCH resource, a PUCCH resource configured by a PUCCH configuration (PUCCH-Config), a UE-dedicated PUCCH, and a UE-dedicated PUCCH resource may be interchangeably interpreted.

In each embodiment, a specific channel/signal, a specific channel / signal / resource / resource set, a specific signal, a specific channel, a specific resource, a resource / resource set of a specific channel/RS, a specific channel / RS / resource / resource set, and one of a PDSCH/PDCCH/CSI-RS/PUSCH/PUCCH/SRS/CORESET may be interchangeably interpreted.

In each embodiment, a specific channel/RS sharing the same TCI state with a target channel, a specific channel/RS sharing a TCI state indicated for a target channel, the TCI state of a specific channel/RS being configured/indicated together with the TCI state of a target channel, the TCI state of a specific channel/RS referring to the TCI state of a target channel, a TCI state being shared between a specific channel/RS and a target channel, the same TCI state being applied to both a specific channel/RS and a target channel, the TCI state of a specific channel/RS being the same as the TCI state of a target channel, the TCI state of a specific channel/RS being the same as a unified TCI state, and the TCI state of a specific channel/RS being updated/indicated/configured by a unified TCI state may be interchangeably interpreted.

In each embodiment, a TCI state for a specific channel/RS may be a TCI state only for the specific channel/RS or may be a unified TCI state.

### <First Embodiment>

This embodiment relates to indication/configuration of whether the TCI state of a specific channel/RS is shared with a target channel (whether the TCI state of a specific channel/RS is the same as a unified TCI state).

The indication may follow at least one of Aspects 1-1 to 1-4 below.

### <<Aspect 1-1>>

The indication/configuration of whether the TCI state of the specific channel/RS is shared with the target channel is performed in a TCI state (TCI state information element, TCI state for the specific channel/RS). This indication may follow at least one of indication methods 1-1 to 1-4 below.

### {Indication Method 1-1}

The indication may be explicit indication for each TCI state ID by RRC configuration indicating that the TCI state is shared with the target channel. The TCI state ID may be the ID of a joint TCI state for DL and UL, may be the ID of a TCI state for only DL, or may be the ID of a TCI state for only UL.

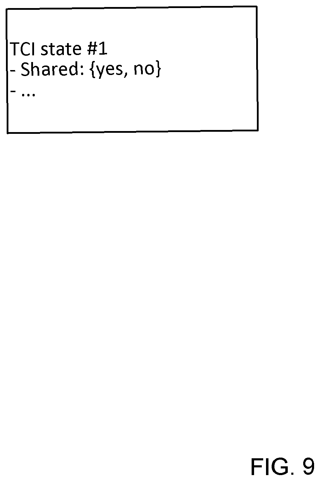

The explicit indication may be constituted by one bit or may be a flag (FIG. 9). For example, indication with 0 may indicate that the TCI state is not shared with the target channel, while indication with 1 may indicate that the TCI state is shared with the target channel. The values of the indication may indicate the opposite.

The explicit indication may be constituted by more than one bit. The explicit indication may indicate to/by which channel / RS / resource / resource set the TCI state is applied/shared. For example, when the explicit indication indicates CORESET #1/#2 and CSI-RS resource #2/#3, the TCI state is applied to the indicated resource.

### {Indication Method 1-2}

The indication may be explicit indication of a list of TCI states shared with the target channel by RRC configuration. Each TCI state in the list may be the ID of a joint TCI state for DL and UL, may be the ID of a TCI state for only DL, or may be the ID of a TCI state for only UL. For example, when the explicit indication is a list of TCI state IDs #1, #3, and #5, the TCI states are shared with the target channel.

### {Indication Method 1-3}

Explicit indication may be absent. For each specific channel/RS (DL/UL channel/RS), a TCI state ID may be configured. The TCI state ID may be the ID of a joint TCI state for DL and UL, may be the ID of a TCI state for only DL, or may be the ID of a TCI state for only UL. If the TCI state of the specific channel/RS is configured at the same ID as the TCI state of the target channel, this may mean that the TCI state is shared with the target channel. For example, if the same TCI state ID is configured for a CSI-RS and a UE-dedicated CORESET, this may mean that the TCI state is shared for the TCI state by the CSI-RS and the UE-dedicated CORESET.

### {Indication Method 1-4}

The indication may be only indication/configuration (common indication) of whether the TCI state for the specific channel/RS is shared with the target channel. The indication need not include explicit association with the TCI state. The indication may be constituted by one bit indicating whether the TCI state is shared with the target channel. The indication may be applied to all the TCI states for the specific channel/RS or may be applied to all the TCI states satisfying a QCL rule (for example, option A1/A2/B1/B2/B3 described above) among the TCI states for the specific channel/RS. The UE may assume that only a TCI state(s) satisfying the QCL rule is shared with the target channel.

### <<Aspect 1-2>>

The indication/configuration of whether the TCI state of the specific channel/RS is shared with the target channel may be performed outside each TCI state (TCI state information element, TCI state for the specific channel/RS), or the indication of whether the TCI state of the specific channel/RS is shared with the target channel may be implicit indication.

The indication may be explicit indication of a list of resources / resource sets (specific resources / resource sets, resources / resource sets of the specific channel/RS) each sharing a TCI state with the target channel by RRC configuration. The TCI state for the specific resource / resource set may be shared with the target channel. The specific resource / resource set may be a resource / resource set for the specific channel/RS.

The specific resource / resource set may include at least one of an aperiodic (AP)-CSI-RS for BM, an AP-CSI-RS for CSI, a DL DMRS for non-UE-dedicated (cell specific) PDCCH/PDSCH from a serving cell, and an AP-SRS for BM.

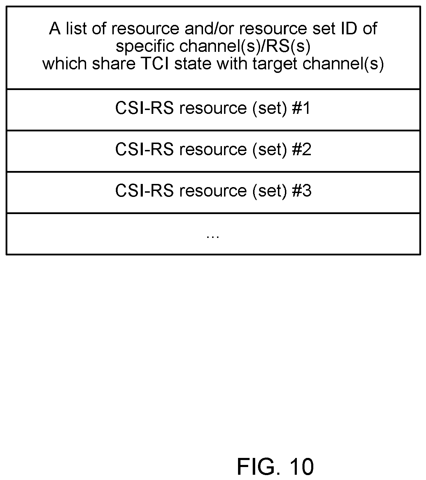

FIG. 10 shows an example of a list of specific resources / resource sets. In this example, the list includes CSI-RS resources (sets) #1, #2, and #3. The TCI state of the target channel may be applied to CSI-RS resources (sets) #1, #2, and #3 in the list.

For each DL/UL channel/RS or each resource / resource set, a TCI state or a list of TCI states may be configured in a TCI state framework of Rel. 15. In Rel. 15/16, for each resource / resource set / channel / CORESET, the IDs / list of TCI states are configured by an RRC IE, and indication is made by a MAC CE / DCI. Th UE uses the indicated TCI state. For UL, a spatial relation may be used instead of a TCI state.

For each DL/UL channel/RS or each resource / resource set, a TCI state or a list of TCI states may be configured according to at least one of indication methods 2-1 to 2-5 below in the unified TCI state framework of Rel. 17.

### {Indication Method 2-1}

An enabler (enabling information element) of a TCI state of Rel. 17 (that the specific channel / RS / resource / resource set shares a unified TCI state for the target channel) may be configured by an RRC parameter. For each specific channel / RS / resource / resource set, an enabler (enabling/disabling of a TCI state of Rel. 17) may be configured.

When this enabler is configured, it is not necessary to indicate a TCI state ID of Rel. 17 for the specific channel / RS / resource / resource set / CORESET. It is only need to configure, for indication of a TCI state of Rel. 17 for the specific channel / RS / resource / resource set /CORESET, a TCI state pool over a plurality of channels / RSs / resources / resource sets / CORESETs (target channel and specific channel/RS).

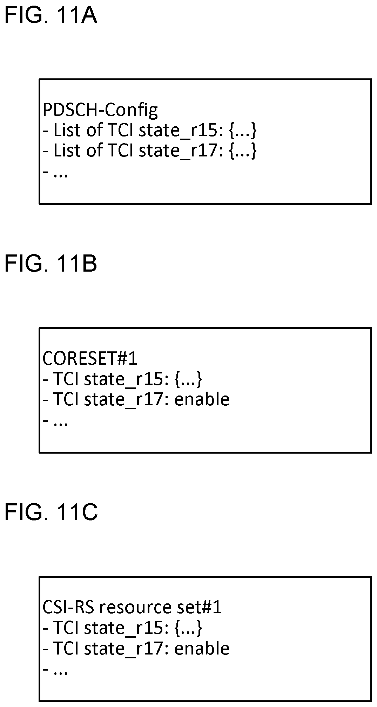

In the example in FIG. 11A, a PDSCH configuration (PDSCH-Config) may include at least one of a Rel-15 TCI state list and a Rel-17 TCI state list. When a plurality of Rel-17 TCI states are configured, a MAC CE / DCI may indicate one of the plurality of configured Rel-17 TCI states. The indicated TCI state may be used by a plurality of channels/RSs for which a Rel-17 TCI state is enabled by higher layer signaling.

In the example in FIG. 11B, CORESET configuration (ControlResourseSet) #1 may include at least one of a Rel-15 TCI state and enabling of a Rel-17 TCI state. In Rel. 15, a TCI state ID is configured for each CORESET. Since a TCI state pool for the Rel-17 TCI state is configured in a PDSCH configuration, a flag for enabling the Rel-17 TCI state is sufficient in the CORESET configuration. When a plurality of Rel-17 TCI states are configured, a MAC CE / DCI may indicate one of the plurality of configured Rel-17 TCI states. It is not necessary to indicate a TCI state ID for Rel. 17 in the CORESET configuration other than a TCI state pool being configured (for example, in the PDSCH configuration).

In the example in FIG. 11C, a CSI-RS resource set configuration (NZP-CSI-RS-ResourceSet) #1 may include at least one of a Rel-15 TCI state and enabling of a Rel-17 TCI state. In Rel. 15, a TCI state ID is configured for each CSI-RS resource set. Since a TCI state pool is configured for the Rel-17 TCI state in the PDSCH configuration, a flag for enabling the Rel-17 TCI state is sufficient in the CSI-RS resource set configuration. When a plurality of Rel-17 TCI states are configured, a MAC CE / DCI may indicate one of the plurality of configured Rel-17 TCI states. It is not necessary to indicate a TCI state ID for Rel. 17 in the CSI-RS resource set configuration other than a TCI state pool being configured (for example, in the PDSCH configuration).

When an enabler is configured, an indicated unified TCI state may be applied to the specific channel / RS / resource / resource set. For each channel / RS / resource / resource set, an enabler may be configured.

For a channel / RS / resource / resource set configured with a TCI state / spatial relation of Rel. 15, no Rel-17 TCI state may be applied.

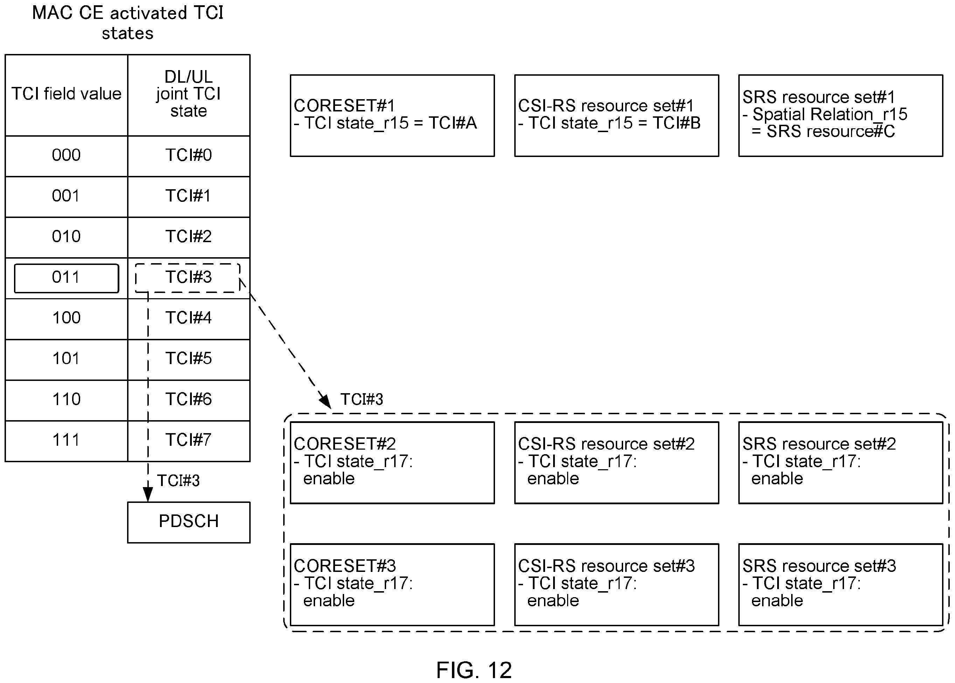

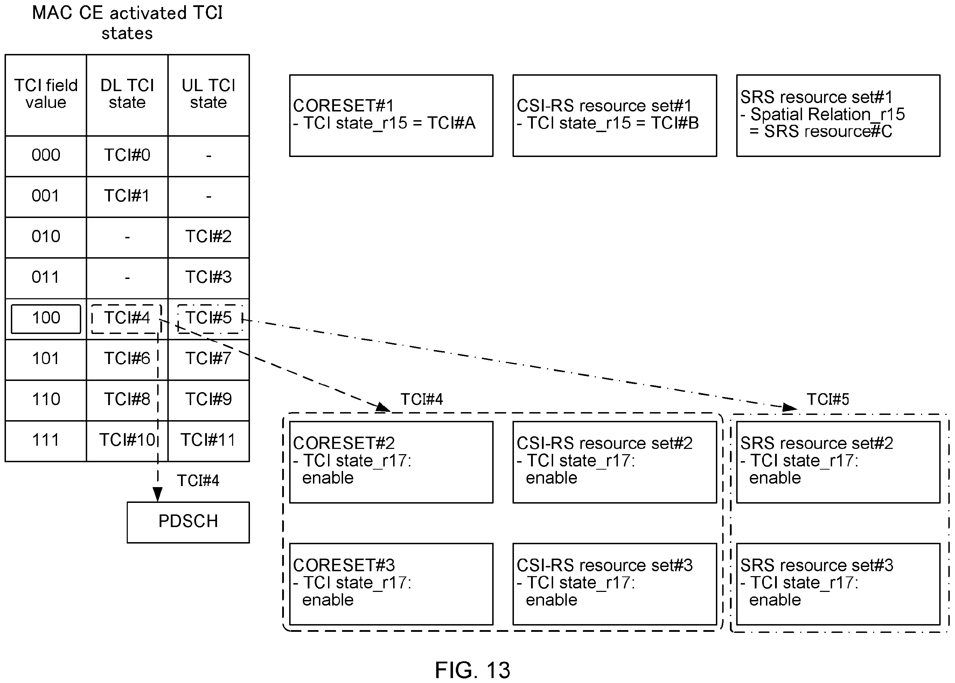

In the examples in FIG. 12 and FIG. 13, for each of first resources (specific resources, CORESETs #2 and #3, CSI-RS resource sets #2 and #3, SRS resource sets #2 and #3), an enabler for a Rel-17 TCI state is configured. A Rel-15 TCI state (TCI state #A) is configured for CORESET #1, a Rel-15 TCI state (TCI state #B) is configured for CSI-RS resource set #1, and a Rel-15 spatial relation (SRS resource #C) is configured for SRS resource set #1.

FIG. 12 shows examples of a joint TCI state.

In this example, an RRC IE configures a joint TCI state pool for DL and UL, a MAC CE indicates/activates a joint TCI state ID for each value (codepoint) in a TCI field, and DCI indicates one value (011) in the TCI field, which value corresponds to TCI state #3. TCI state #3 thus indicated is applied to a plurality of channels / RSs / resources / resource sets (PDSCH, CORESETs #2 and #3, CSI-RS resource sets #2 and #3, SRS resource sets #2 and #3) .

For second resources (other than the specific resources, CORESET #1, CSI-RS resource set #1, SRS resource set #1) configured with a TCI state / spatial relation of Rel. 15, no Rel-17 TCI state may be applied.

FIG. 13 shows examples of separate TCI states.

In this example, an RRC IE configures a separate TCI state pool for each of DL and UL, a MAC CE indicates/activates a DL TCI state ID / UL TCI state ID for each value (codepoint) in a TCI field, and DCI indicates one value (100) in the TCI field, which value corresponds to TCI state #4 for DL and TCI state #5 for UL. TCI state #4 is applied to a plurality of DL channels / RSs / resources / resource sets (PDSCH, CORESETs #2 and #3, CSI-RS resource sets #2 and #3). TCI state #5 is applied to a plurality of UL channels / RSs / resources / resource sets (SRS resource sets #2 and #3).

For second resources (other than the specific resources, CORESET #1, CSI-RS resource set #1, SRS resource set #1) configured with a TCI state / spatial relation of Rel. 15, no Rel-17 TCI state may be applied.

The TCI state pool may be CC-specific or CC-common.

The TCI pool may be configured outside the PDSCH configuration.

### {Indication Method 2-2}

Enabling of a TCI state of Rel. 17 (that the specific channel / RS / resource / resource set shares a unified TCI state for the target channel) may be indicated without using an enabler.

If no TCI state of Rel. 15/16 is present (configured), a joint TCI state or a DL TCI state may be applied to the specific channel / RS / resource / resource set. If no spatial relation of Rel. 15/16 is present (configured) (and when no enabler for a default beam and a PL-RS is present), a joint TCI state or a UL TCI state may be applied to the specific channel / RS / resource / resource set.

At least one of a channel/RS to which a Rel-17 TCI state is applied and the ID of the resource / resource set of the channel/RS may be configured by higher layer signaling. For the configured channel / RS / resource / resource set, the Rel-17 TCI state may be applied. It may be defined that the channel / RS / resource / resource set configured with the Rel-17 TCI state is not configured with any TCI state / spatial relation of Rel. 15/16.

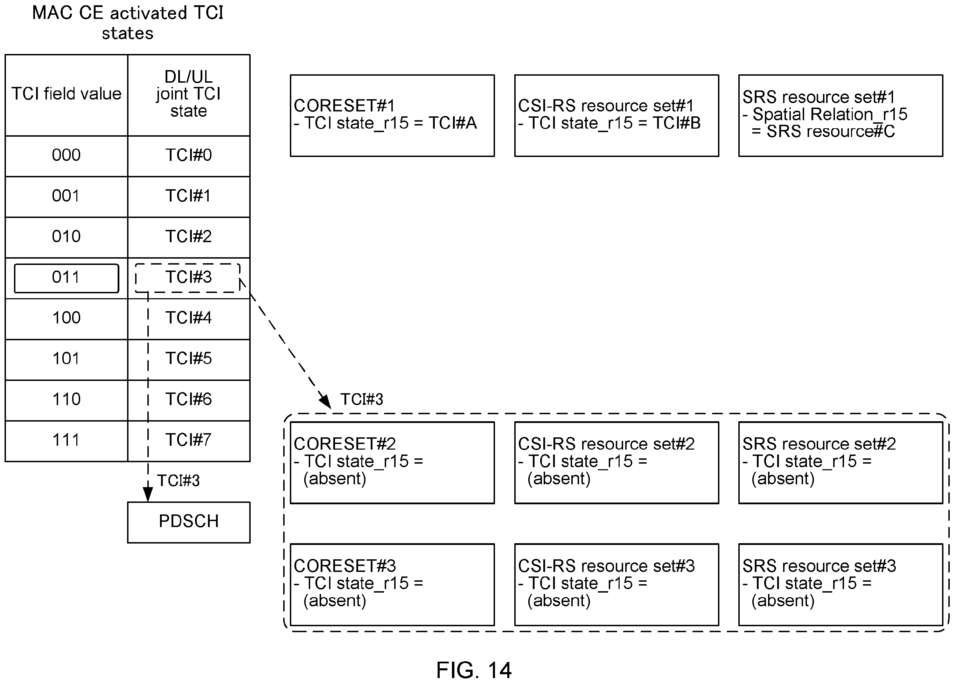

In the example in FIG. 14, for each of first resources (specific resources, CORESETs #2 and #3, CSI-RS resource sets #2 and #3, SRS resource sets #2 and #3), no TCI state / spatial relation of Rel. 15 is configured. A Rel-15 TCI state (TCI state #A) is configured for CORESET #1, a Rel-15 TCI state (TCI state #B) is configured for CSI-RS resource set #1, and a Rel-15 spatial relation (SRS resource #C) is configured for SRS resource set #1.

In this example, an RRC IE configures a joint TCI state pool for DL and UL, a MAC CE indicates/activates a joint TCI state ID for each value (codepoint) in a TCI field, and DCI indicates one value (011) in the TCI field, which value corresponds to TCI state #3. TCI state #3 thus indicated is applied to channels / RSs / resources / resource sets not configured with any TCI state / spatial relation of Rel. 15 (PDSCH, CORESETs #2 and #3, CSI-RS resource sets #2 and #3, SRS resource sets #2 and #3).

### {Indication Method 2-3}

Enabling of a TCI state of Rel. 17 for a specific channel / RS / resource / resource set (that the specific channel / RS / resource / resource set shares a unified TCI state for the target channel) may be indicated without using an enabler.

Similarly to Rel. 15/16, for each specific channel / RS / resource / resource set / CORESET, IDs / a list of TCI states may be configured.

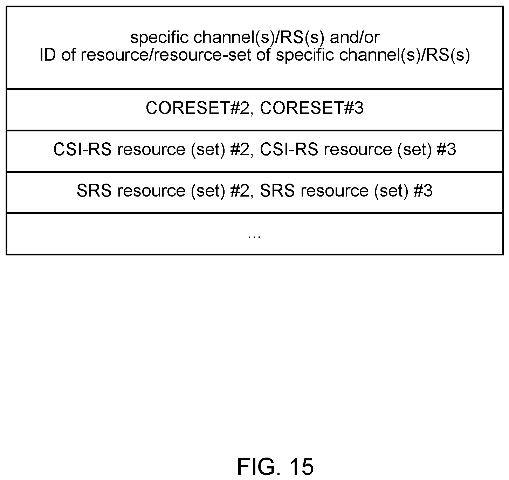

At least one of a specific channel/RS to which a Rel-17 TCI state is applied and the ID of the resource / resource set of the channel/RS (first resource) may be configured by higher layer signaling (FIG. 15).

The channel / RS / resource / resource set configured by the higher layer signaling (to which the Rel-17 TCI state is applied) may be configured with a TCI state / spatial relation of Rel. 15/16. In this case, the TCI state / spatial relation of Rel. 15/16 configured for the specific channel / RS / resource / resource set may be ignored, and the Rel-17 TCI state may be applied to the channel / RS/ resource / resource set.

### {Indication Method 2-4}

Based on indication method 1-1, whether the specific channel / RS / resource / resource set shares the unified TCI state of Rel. 17 with the target channel may be indicated/configured. Whether the specific channel / RS / resource / resource set shares the unified TCI state of Rel. 17 with the target channel may be different depending on which TCI state (for example, a value in the TCI field, TCI state ID) is indicated for the specific channel/RS or may be different depending on a resource / resource set applied to the specific channel/RS.

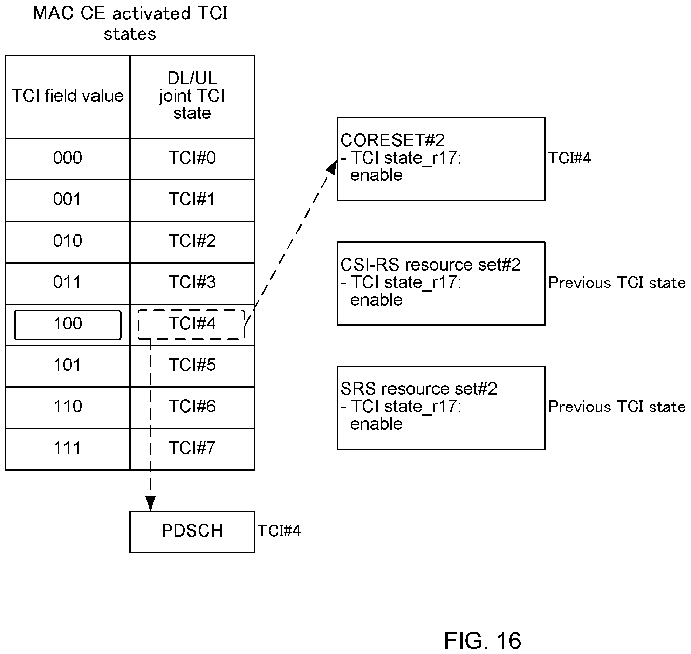

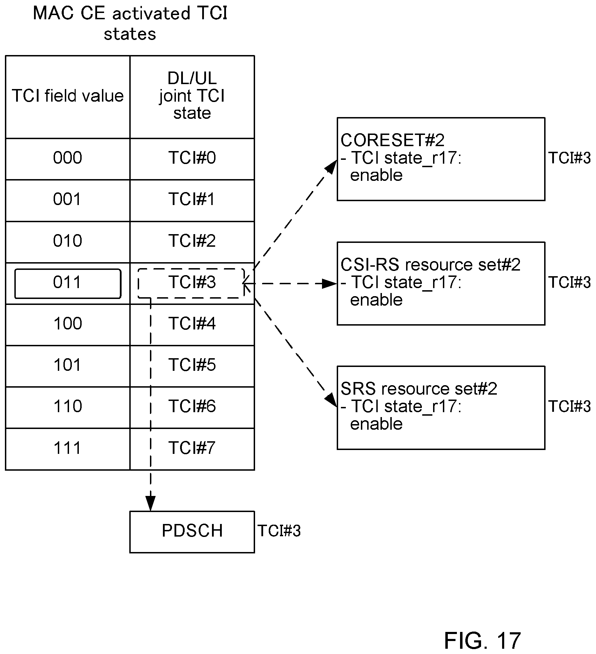

In the examples in FIG. 16 and FIG. 17, for each of CORESET #2, CSI-RS resource set #2, and SRS resource set #2, an enabler for enabling a Rel-17 TCI state is configured. An RRC IE configures a joint TCI state pool, and a MAC CE indicates/activates a TCI state for each value in the TCI field from a joint TCI state pool.

FIG. 16 shows a case where a joint TCI state indicated for the specific channel / RS / resource / resource set is not shared with the target channel. In this example, DCI indicates one value (100) in the TCI field. Indicated TCI state #4 is not shared with the target channel. TCI state #4 is applied to a PDSCH and CORESET #2 and is not applied to CSI-RS resource set #2 and SRS resource set #2. A TCI state used immediately before is maintained for each of CSI-RS resource set #2 and SRS resource set #2.

FIG. 17 shows a case where a joint TCI state indicated for the specific channel/RS is not shared with the target channel. In this example, DCI indicates one value (011) in the TCI field. Indicated TCI state #3 is shared with the target channel. TCI state #3 is applied to a PDSCH, CORESET #2, CSI-RS resource set #2, and SRS resource set #2.

The QCL rule (for example, option A1/A2/B1/B2/B3 described above) may be different for cases 1 and 2 below.

### {Case 1}

The TCI state of Rel. 17 for the specific channel/RS is shared/configured/indicated with the target channel.

### {Case 2}

The TCI state of Rel. 17 for the specific channel/RS is shared/configured/indicated with the target channel.

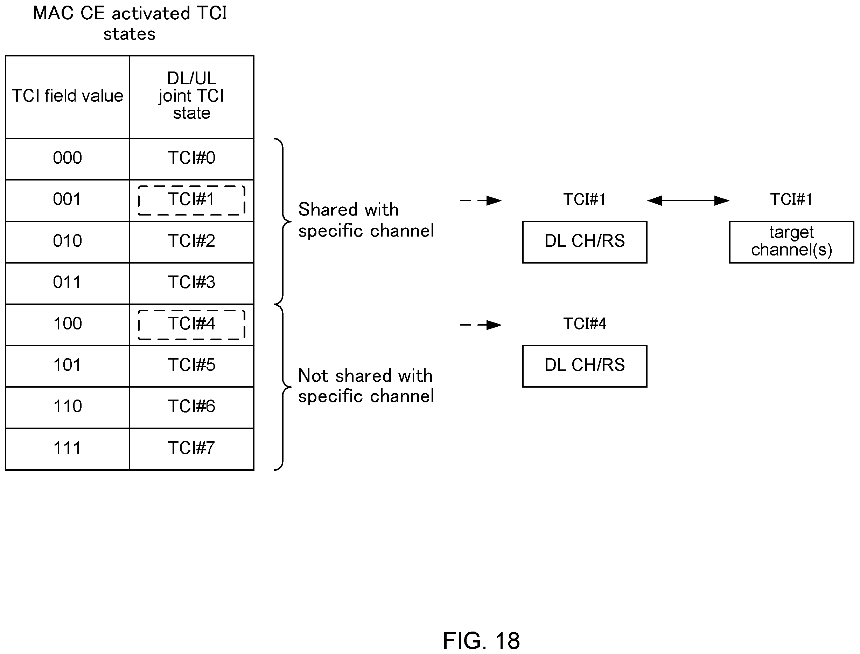

In the example in FIG. 18, an RRC IE configures a joint TCI state pool for DL and UL, a MAC CE indicates/activates a joint TCI state ID for each value (codepoint) in a TCI field, and DCI indicates one value in the TCI field. TCI states corresponding to a first range of values in the TCI field (for example, 000 to 011) are shared with the target channel, and TCI states corresponding to a second range of values in the TCI field (for example, 100 to 111) are not shared with the target channel. When the DCI indicates the value 001 in the first range, options A1/A2 described above is permitted for corresponding TCI state #1. TCI state #1 is applied to a Rel-17 TCI state target channel / RS / resource / resource set and is shared with the target channel. When the DCI indicates the value 100 in the second range, a QCL rule in an existing specification (for example, option B1/B2/B3 described above) is permitted for corresponding TCI state #4. TCI state #4 is applied to a Rel-17 TCI state target channel / RS / resource / resource set and is not shared with the target channel. Note that, in this example, a separate TCI state (DL TCI state / UL TCI state) may be used instead of the joint TCI state.

### {Indication Method 2-5}

Only indication/configuration (common indication) of whether the TCI state for the specific channel/RS is shared with the target channel may be configured. The indication need not include explicit association with a resource / resource set. A resource / resource set to which the indication is applied (specific resource / resource set, default resource) may be defined in a specification. The indication may be constituted by one bit indicating, for each channel/RS/BWP/CC, whether the TCI state is shared with the target channel. If it is configured that the TCI state for the specific channel/RS is shared with the target channel, the TCI states for all the resources / resource sets of the specific channel/RS may be updated/indicated by Rel-17 TCI states, or the TCI state of a specific resource /resource set among the resources / resource sets of the specific channel/RS may be updated/indicated by a Rel-17 TCI state.

According to this embodiment, the UE can appropriately determine whether the TCI state for a specific channel/RS is shared with a target channel.

### <Second Embodiment>

This embodiment relates to BFD/RLM.

A unified TCI state ID (indicating at least one of a joint TCI state for DL and UL, a TCI state for DL, and a TCI state for UL) may be configured/indicated by an RRC IE / MAC CE / DCI.

In a unified TCI framework, how the UE determines an RLM/BFD RS may follow at least one of RLM/BFD RS determination methods 1 and 2 below.

### {RLM/BFD RS Determination Method 1}

A BFD/RLM RS (explicit BFD / RLM RS) may be indicated by L1 signaling (DCI). When no BFD/RLM RS is configured, a BFD/RLM RS (implicit BFD/RLM RS) may be derived from QCL assumption / TCI state of a CORESET or may be derived from QCL assumption / TCI state of a unified/common TCI state.

### {RLM/BFD RS Determination Method 2}

A BFD/RLM RS need not be indicated by L1 signaling (DCI). When no BFD/RLM RS is configured, a BFD/RLM RS (implicit BFD/RLM RS) may be derived from QCL assumption / TCI state of a CORESET or may be derived from QCL assumption / TCI state of a unified/common TCI state.

For these RLM/BFD RS determination methods, a joint TCI state and a separate TCI state need be considered. For these RLM/BFD RS determination methods, it is not considered whether a unified TCI state used for determination of an RLM/BFD RS is shared/configured/indicated with a target channel.

### <<Aspect 2-1>>

A BFD/RLM RS may be derived from a unified TCI state.

In Rel. 17, a joint TCI state and a separate TCI state may be switched by an RRC IE (joint TCI state or separate TCI state may be configured). In Rel. 18, a joint TCI state or both separate TCI states may be configured. A MAC CE / DCI may select one of these.

If the joint TCI state is configured, a BFD/RLM RS may be derived/determined from the joint TCI state.

A method of determining a BFD/RLM RS, based on a TCI, may follow one of determination methods 1 and 2 below.

### {Determination Method 1}

The UE may use a QCL source RS of a TCI state for a BFD/RLM RS. When there are two QCL source RSs (for example, a QCL type A RS and a QCL type D RS), the UE may use the QCL type D RS for the BFD/RLM RS.

### {Determination Method 2}

The UE may use a QCL type D source RS for a BFD/RLM RS.

Determination method 1 may be applied to both frequency range (FR) 1 and FR2. Even when no QCL type D RS is configured or in a case of FR1, determination method 1 can appropriately determine a BFD/RLM RS.

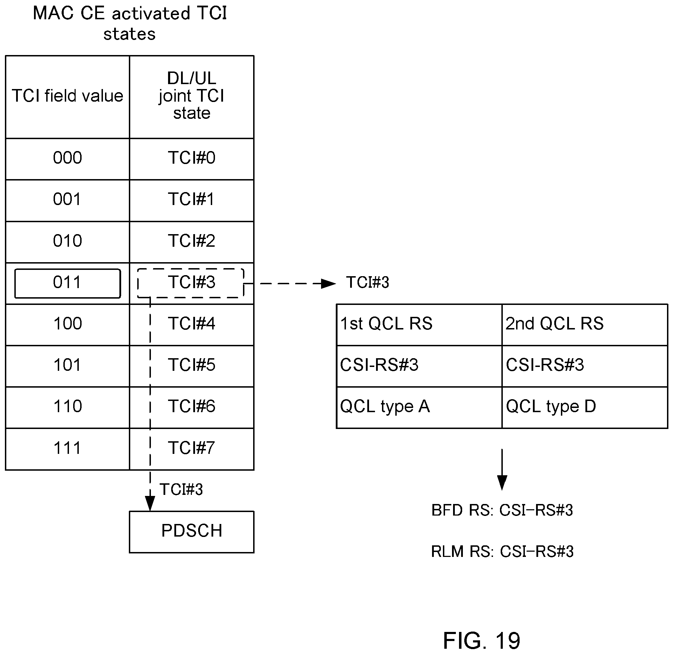

FIG. 19 shows examples of a joint TCI state being configured. In this example, an RRC IE configures a joint TCI state pool, a MAC CE indicates/activates a TCI state for each value in a TCI field from the joint TCI state pool, and DCI indicates one value in the TCI field. In this example, by the value 011 in the TCI field, TCI state #3 is indicated. TCI state #3 is applied to a PDSCH. TCI state #3 includes a first QCL RS (first QCL type) and a second QCL RS (second QCL type). The first QCL RS indicates QCL type A and CSI-RS #3, and the second QCL RS indicates QCL type D and CSI-RS #3. The UE may use CSI-RS #3 for a BFD RS or may use CSI-RS #3 for an RLM RS.

If a separate TCI state for DL/UL is configured, a BFD/RLM RS may be derived/determined from a DL TCI state in the separate TCI state for DL/UL.

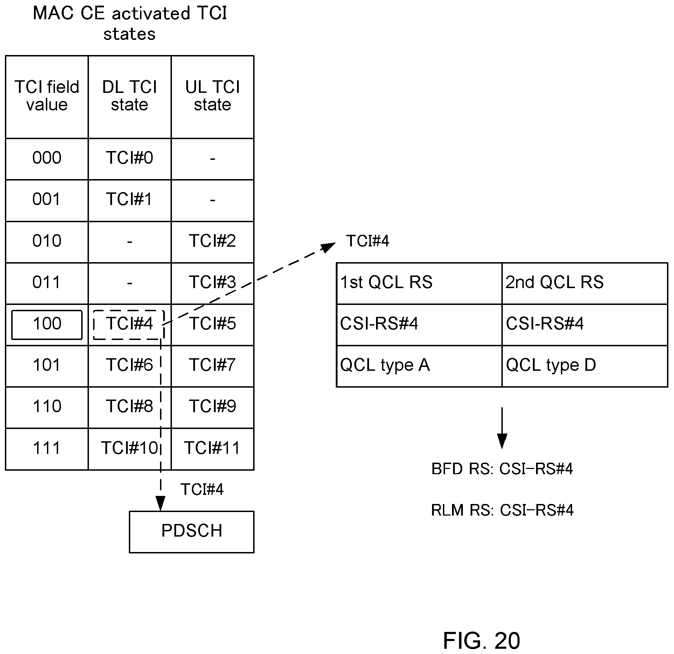

FIG. 20 shows examples of a separate TCI state being configured. In this example, an RRC IE configures separate TCI state pools, a MAC CE indicates/activates a DL TCI state / UL TCI state for each value in a TCI field from the corresponding separate TCI state pool, and DCI indicates one value in the TCI field. In this example, by the value 100 in the TCI field, DL TCI state #4 and UL TCI state #5 are indicated. TCI state #4 is applied to a PDSCH. TCI state #4 includes a first QCL RS (first QCL type) and a second QCL RS (second QCL type). The first QCL RS indicates QCL type A and CSI-RS #4, and the second QCL RS indicates QCL type D and CSI-RS #4. The UE may use CSI-RS #4 for a BFD RS or may use CSI-RS #4 for an RLM RS.

Only when no explicit BFD/RLM RS is configured, this aspect may be applied.

### <<Aspect 2-2>>

The following two cases may be present for a certain unified TCI state.

### {Case 1}

The unified TCI state is shared/configured/indicated with the target channel.

### {Case 2}

The unified TCI state is not shared/configured/indicated with the target channel.

An explicit RRC parameter indicating whether the certain unified TCI state is shared with the target channel may be configured.

The unified TCI state of only case 1 may be regarded as a BFD/RLM RS. In this case, when the unified TCI state used for the target channel has a failure, the failure can be detected by BFD/RLM.

The unified TCI state of only case 2 may be regarded as a BFD/RLM RS.

The unified TCI states of both cases 1 and 2 may be regarded as a BFD/RLM RS. Irrespective of which TCI state is indicated, the latest TCI state is used for a BFD/RLM RS.

The BFD/RLM is performed by a DL RS, and a unified TCI state may be a joint TCI state for DL and UL or may be a TCI state for DL.

For a CORESET with a unified TCI state of Rel. 17, an RS in the TCI state may be able to be regarded as a BFD/RLM RS.

For a CORESET with a TCI state of Rel. 15/16, an RS in the TCI state may be able to be regarded as a BFD/RLM RS.

Irrespective of whether the TCI state for the CORESET is a unified TCI state of Rel. 17 or a TCI state of Rel. 15/16, all the RSs in the TCI state may be able to be regarded as a BFD/RLM RS.

When the number of TCI states from the CORESET exceeds the maximum number (for example, two), the UE may give a higher priority to a CORESET with a unified TCI state of Rel. 17 in selection of a BFD/RLM RS.

According to this embodiment, even in a case of using a unified TCI state, the UE can appropriately determine BFD/RLM.

### <Third Embodiment>

This embodiment relates to new beam detection (NBI).

In existing specifications, 28 symbols after BFR completion, a beam of a CORESET/PUCCH is updated to q_new. If BFR is not completed, BFR is performed again based on a failure beam, and hence it is considered that the UE cannot perform transmission/reception of control information in the failure beam.

Beam application timing based on the BFR completion (reception of a BFR response from a base station) may follow at least one of timing 1 to timing 4 below.

### {Timing 1}

28 symbols after the last symbol in a DCI format with cyclic redundancy check (CRC) scrambled with a cell (C)-radio network temporally identifier (RNTI) or a modulation and coding scheme (MCS)-C-RNTI in a BFR search space in BFR (Rel. 15) in an SpCell.

### {Timing 2}

28 symbols after the last symbol in a DCI format with CRC scrambled with a C-RNTI in any search space in contention based random access (CBRA) based BFR (Rel. 16) in an SpCell.

### {Timing 3}

28 symbols after the last symbol in a DCI format scheduling a PUSCH with the same HARQ process number as the HARQ process number of a first PUSCH and including a toggled new data indicator (NDI) field in BFR MAC CE based BFR (Rel. 16) in an SCell.

### {Timing 4}

In TRP-specific BFR (Rel. 17) in an SpCell/SCell, update of QCL assumption for a CORESET with two activated TCI states after reception of a BFR response may be that the CORESET with the two activated TCI states is updated to have one TCI state for BFR for each cell, that a TCI state associated with a BFD-RS set with a failure is updated for BFR for each TRP in single-DCI based multi-TRP, or may be that a TCI state associated with a BFD-RS set / CORESET pool index with a failure is updated after reception of a BFR response for BFR for each TRP in multi-DCI based multi-TRP.

Beam application timing in a unified TCI state may be Y symbols after ACK for a beam indication (the first slot at least Y symbols after the last symbol in ACK for a joint or separate DL/UL beam indication). For CA, Y may be based on the smallest subcarrier spacing (SCS) in a CC (cell) to which the beam is applied. Y may be given by an RRC parameter, beam application time (BAT for example, BeamAppTime_r17).

In the present disclosure, BFR completion, reception of a response to BFR (BFR response (BFRR)), and the last symbol in a specific DCI format for BFR may be interchangeably interpreted. The specific DCI format may be a DCI format in at least one of timing 1 to timing 3 described above.

In a unified TCI framework of Rel. 17, X symbols after reception of a BFFR, a new/updated QCL source RS may be applied to a target channel in a CC and a channel/signal (specific channel/RS) configured to share a TCI state of Rel. 17.

### <<Aspect 3-1>>

Y for Y symbols from BFR completion to update of a unified TCI state may be configured by RRC, may be reported as a UE capability, or may be defined in a specification. Y may be common among a plurality of SCSs or may be a different value depending on SCS. Y may be the same value as that of Y for beam application timing. In other words, Y symbols after reception of a BFR response by the UE, a new/updated QCL source RS may be applied to all or part of a PDCCH/PDSCH/PUCCH/PUSCH.

### <<Aspect 3-2>>

In a case of CA, q_new may be applied to all the BWPs/CCs in a CC list or may be applied to all the BWPs/CCs in a TCI state pool. q_new may be applied to all the BWPs/CCs in a BFR MAC CE. The case of CA may be a case where a simultaneous beam update list (CC list) is configured, may be a case where a CC-common TCI state pool is configured, or a case where a BFR MAC CE includes a plurality of CCs with a beam failure.

q_new may be applied to all the BWPs/CCs in a CC reported as a CC with a failure in the BFR MAC CE.

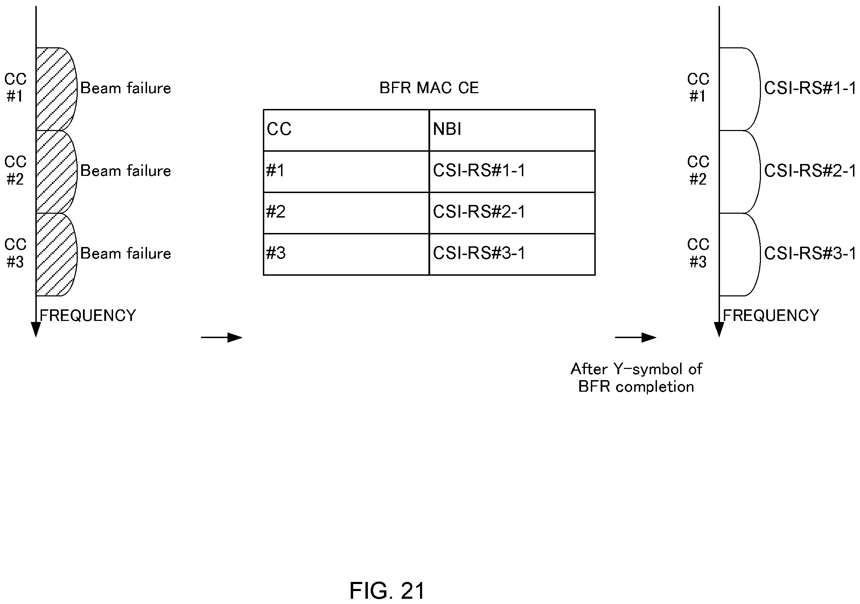

In the example in FIG. 21, the UE detects a beam failure in each of CCs #1, #2, and #3, and the UE reports CSI-RSs #1-1, #2-1, and #3-1 respectively as NBIs for CCs #1, #2, and #3 in a BFR MAC CE. The UE applies CSI-RSs #1-1, #2-1, and #3-1 respectively as unified TCI states for CCs #1, #2, and #3, Y symbols after BFR completion.

An RS of q_new may be a CC-common RS (for example, a BFR RS) or may be a CC-specific RS. For the CC-specific RS, an NBI-RS for each CC reported in the BFR MAC CE may be used for q_new.

In a case where the simultaneous update list (CC list) is configured, or a case where the CC-common TCI state pool is configured, when a beam failure is detected in some CCs among the same CCs as the CCs in the list/pool while no beam failure is detected in the other CCs, the UE may follow one of update operations 1 and 2.

### {Update Operation 1}

Beams of only the CCs in which a beam failure is detected may be updated to q_new.

### {Update Operation 2}

Beams of all the CCs in the CC list / TCI state pool may be updated to q_new. The UE may follow at least one of derivation methods 1 and 2 below to determine q_new for each BWP/CC.

### {{Derivation Method 1}}

CC-common q_new: an RS of q_new of a BWP/CC with a beam failure is used for all the BWPs/CCs in the same CC list / TCI state pool. {{Derivation Method 2}}
CC-specific q_new: the index of an RS of q_new of a BWP/CC with a beam failure is used for all the BWPs/CCs in the same CC list / TCI state pool. For example, if CSI-RS #1 in BWP #1 in CC #1 is determined for CC #1, the same index of a CSI-RS in BWP #1 of each BB may be used for all the other CCs.

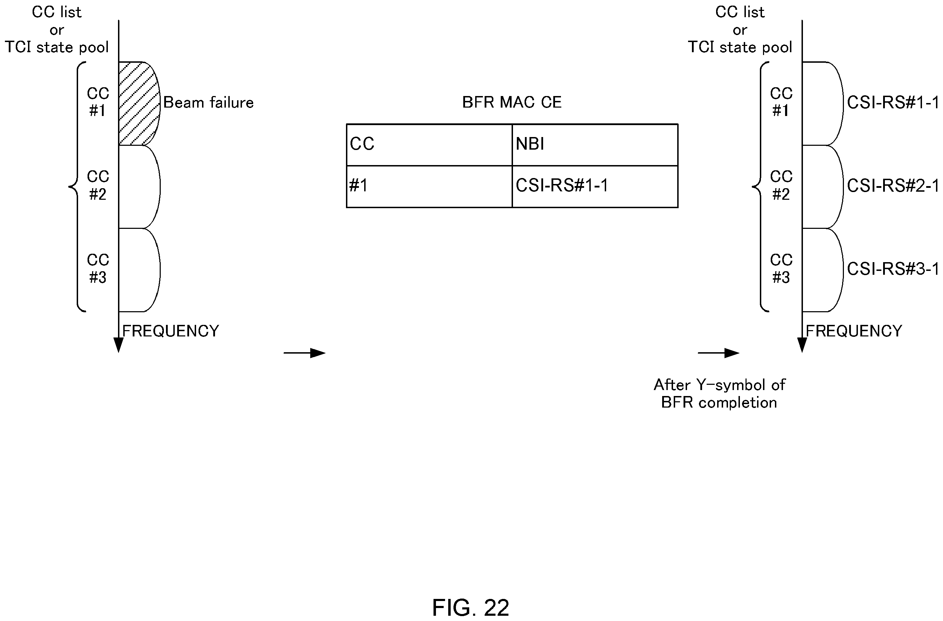

In the example in FIG. 22, a CC list / TCI state pool indicates CCs #1, #2, and #3. The UE detects a beam failure in CC #1, and the UE reports CSI-RS #1-1 (CSI-RS with index #1 in CC #1) as an NBI for CC #1 in a BFR MAC CE. Y symbols after BFR completion, reported CSI-RS #1-1 is applied as a unified TCI state for CC #1, CSI-RS #2-1 (CSI-RS with same index #1 in CC #2) is applied as a unified TCI state for CC #2, and CSI-RS #3-1 (CSI-RS with same index #1 in CC #3) is applied as a unified TCI state for CC #3. The UE may report a CC and an NBI with a failure by contention-free random access (CFRA) or CBRA BFR instead of the BFR MAC CE.

### <<Aspect 3-3>>

The following two cases may be present for a certain unified TCI state.

### {Case 1}

The unified TCI state is shared/configured/indicated with the target channel.

### {Case 2}

The unified TCI state is not shared/configured/indicated with the target channel.

An explicit RRC parameter indicating whether the certain unified TCI state is shared with the target channel may be configured.

Aspect 3-1/3-2 may be applied to the unified TCI state of only case 1. In this case, similarly to a TCI state of Rel. 15/16, a unified TCI state used for a target channel (for example, a UE-dedicated PDCCH/PUCCH) is updated to q_new.

Aspect 3-1/3-2 may be applied to the unified TCI state of only case 2.

Aspect 3-1/3-2 may be applied to the unified TCI states of both cases 1 and 2. A unified TCI state of any kind may be updated to q_new.

For a CORESET/PUCCH with a unified TCI state of Rel. 17, corresponding QCL assumption may be updated to q_new.

For a CORESET/PUCCH with a TCI state of Rel. 15/16, corresponding QCL assumption may be updated to q_new.

Irrespective of whether the TCI state for the CORESET is a unified TCI state of Rel. 17 or a TCI state of Rel. 15/16, the QCL assumption for the CORESET/PUCCH may be updated to q_new.

### <<Aspect 3-4>>

If a joint TCI state is configured, the joint TCI state may be updated to q_new.

If a separate TCI state is configured, the UE may follow one of separate TCI state update operations 1 to 3 below.

### {Separate TCI state Update Operation 1}

Only a DL TCI state is updated to q_new.

### {Separate TCI state Update Operation 2}

Only a UL TCI state is updated to q_new.

### {Separate TCI state Update Operation 3}

Both a DL TCI state and a UL TCI state are updated to q_new.

By taking into account that beams of both a PDCCH and a PUCCH are updated to q_new, separate TCI state update operation 3 is preferable.

In Rel. 17, one of a joint TCI state and a separate TCI state can be configured. In Rel. 18, both a joint TCI state and a separate TCI state may be configured and may be switched by a joint TCI state or separate TCI state MAC CE / DCI.

### <<Aspect 3-5>>

The UE may set (initialize) all or part of power control parameters of a PUCCH/PUSCH/SRS to specific values (initial values) after BFR completion.

In an existing specification, after BFR completion, the power control parameters of a PUCCH is initialized.

After the BFR completion, the UE may set (initialize) power control parameters of a PUCCH/PUSCH/SRS configured with (associated with) a unified TCI state of Rel. 17 to specific values.

The specific values of the power control parameters may be q_u = 0, q_d = q_new, and l = 0.

The specific values of the power control parameters for PUSCH may be j = 0, q_d = q_new, and 1 = 0.

The specific values of the power control parameters for PUCCH may be q_u = 0, q_d = q_new, and 1 = 0.

The specific values of the power control parameters for SRS may be q_s = 0, q_d = q_new, and 1 = 0.

After BFR completion, the accumulation value of TPC commands for closed-loop power control of a PUCCH/PUSCH/SRS may be set (initialized) to 0.

According to this embodiment, even in a case of using a unified TCI state, the UE can appropriately determine BFD/RLM.

### <Fourth Embodiment>

This embodiment relates to a method of configuring a unified TCI state (joint TCI state or separate TCI state).

In Rel. 17, one of a joint TCI state and a separate TCI state can be configured. A TCI state pool may be configured for each CC (as a CC-specific TCI state pool) or may be configured over a plurality of CCs (as a CC-common TCI state pool).

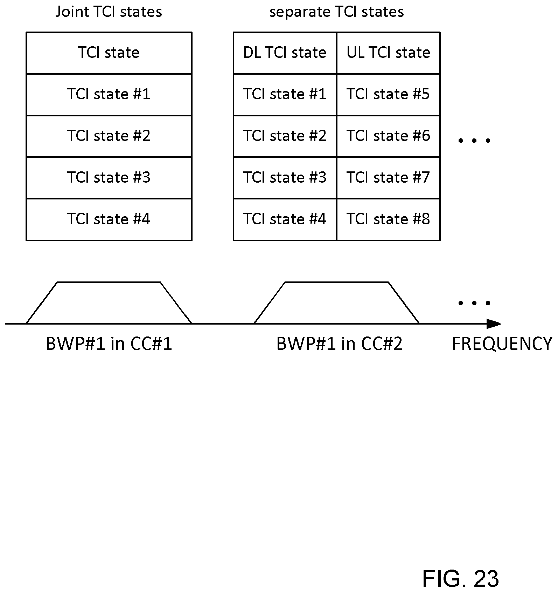

For each UE / each cell group / each CC / each BWP, one of a joint TCI state and a separate TCI state can be configured by an RRC IE. In the example in FIG. 23, joint TCI states (pool) are configured for BWP #1 in CC #1, and separate TCI states (pool) are configured for BWP #1 in CC #2.

If one of a joint TCI state and a separate TCI state is configured for each cell group or for each UE, there is no problem in Rel. 17. However, in Rel. 18, this may make it difficult to permit switching between the joint TCI state and the separate TCI state based on a MAC CE / DCI.

If one of a joint TCI state and a separate TCI state is configured for each BWP or each CC, at least one of restrictions 1 and 2 below may be needed.

### {Restriction 1}

It may be defined that, if a joint TCI state pool is configured for a certain BWP/CC, a separate TCI state cannot be configured for any BWP/CC for/with which the (same) TCI state pool is configured/shared.

### {Restriction 2}

It may be defined that, if a separate TCI state pool is configured for a certain BWP/CC, a joint TCI state cannot be configured for any BWP/CC for/with which the (same) TCI state pool is configured/shared.

According to this embodiment, a unified TCI state can be appropriately configured.

### <Fifth Embodiment>

This embodiment relates to a method of configuring a TCI state in a BWP/CC.

Whether both a TCI state / spatial relation of Rel. 15/16 and a unified TCI state of Rel. 17 are configured may follow one of TCI state configuration methods 1 and 2 below.

### {TCI state Configuration Method 1}

Both a TCI state / spatial relation of Rel. 15/16 and a unified TCI state of Rel. 17 can be configured for the same BWP/CC or different BWPs/CCs.

### {TCI state Configuration Method 2}

Both a TCI state / spatial relation of Rel. 15/16 and a unified TCI state of Rel. 17 cannot be configured for the same BWP/CC or different BWPs/CCs. It may be defined that, when a unified TCI state of Rel. 17 for any CC is configured for the UE, no TCI state / spatial relation of Rel. 15/16 is configured for the UE.

According to this embodiment, a TCI state can be appropriately configured.

### <Other Embodiments>

### <<UE Capability Information / Higher Layer Parameter>>

A higher layer parameter (RRC IE) / UE capability corresponding to a function (characteristics, feature) in each of the embodiments above may be defined. The higher layer parameter may indicate whether the function is enabled. The UE capability may indicate whether the UE supports the function.

The UE configured with the higher layer parameter corresponding to the function may perform the function. The "UE not configured with the higher layer parameter corresponding to the function does not perform the function (for example, follows Rel. 15/16)" may be defined.

The UE that has reported/transmitted the UE capability indicating support of the function may perform the function. The "UE that has not reported the UE capability indicating support of the function does not perform the function (for example, follows Rel. 15/16)" may be defined.

When the UE reports/transmits the UE capability indicating support of the function and is configured with the higher layer parameter corresponding to the function, the UE may perform the function. "When the UE does not report/transmit the UE capability indicating support of the function or when the UE is not configured with the higher layer parameter corresponding to the function, the UE does not perform the function (for example, follows Rel. 15/16)" may be defined.

Which embodiment/option/choice/function in the plurality of embodiments above is to be used may be configured by a higher layer parameter, may be reported by the UE as a UE capability, may be defined in a specification, or may be determined by a reported UE capability and configuration of a higher layer parameter.

The UE capability may indicate whether the UE supports at least one of the following functions.
- Unified TCI framework (at least one of joint TCI state pool, separate TCI state pool, beam indication of a joint TCI state pool, and beam indication of a separate TCI state). The UE capability may include at least one of the maximum number of unified TCI states configured by an RRC IE (the number supported by the UE), the maximum number of TCI states configured for joint beam indication, the maximum number of UL TCI states for separate beam indication (the number supported by the UE), and the maximum number of DL TCI states for separate beam indication. The UE capability may include at least one of the maximum number of active TCI states for a unified TCI state (common beam indication) (the number supported by the UE), the maximum number of active TCI states for joint beam indication (the number supported by the UE), the maximum number of active UL TCI states for separate beam indication (the number supported by the UE), and the maximum number of active DL TCI states for separate beam indication (the number supported by the UE).
- Rel-17 TCI state(s) shared with a specific resource (unified TCI state(s)). The specific resource may be at least one of UE-dedicated reception in a PDSCH/PDCCH, a dynamic grant / configured grant PUSCH, and a dedicated PUCCH resource.
- Rel-17 TCI state(s) not shared with a specific resource (unified TCI state(s)). The specific resource may be at least one of UE-dedicated reception in a PDSCH/PDCCH, a dynamic grant / configured grant PUSCH, and a dedicated PUCCH resource.
- BFR for a unified TCI state.
- Update of q_new after BFR completion for a unified TCI state.

According to the UE capability / higher layer parameter above, the UE can implement the above functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

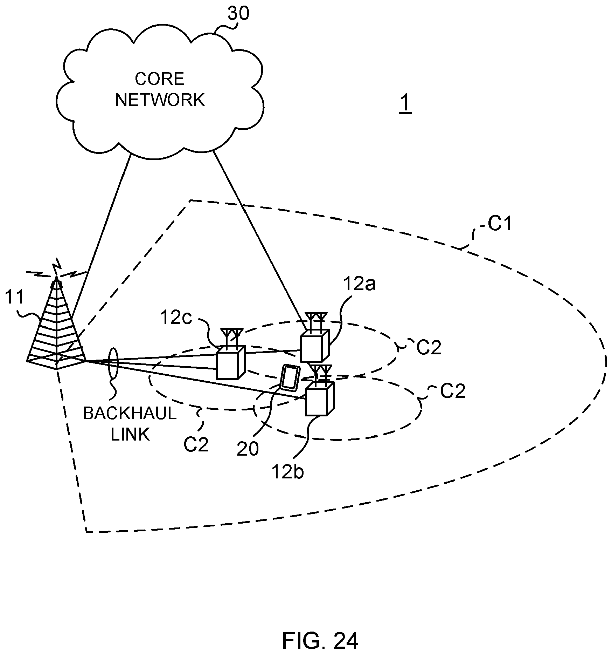

FIG. 24 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

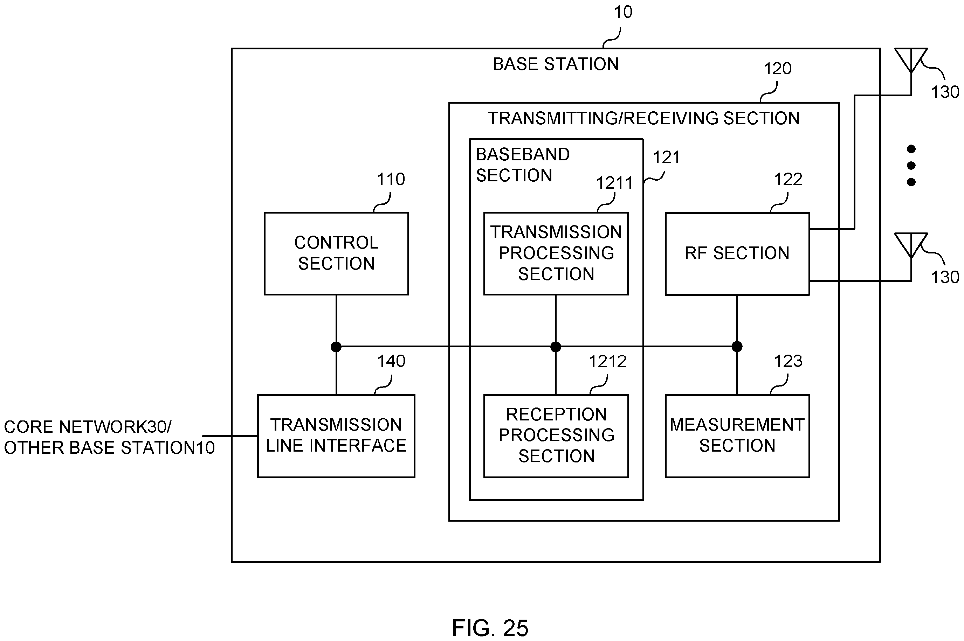

FIG. 25 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration related to a transmission configuration indication (TCI) state applied to a plurality of types of at least one of channels and signals. The control section 110 may determine whether the TCI state is shared with a specific signal.

The transmitting/receiving section 120 may transmit an indication related to a transmission configuration indication (TCI) state applied to a plurality of types of at least one of channels and signals. The control section 110 may control beam failure detection and radio link monitoring using a reference signal based on the TCI state.

The transmitting/receiving section 120 may transmit a plurality of configurations corresponding to a plurality of respective cells. The control section 110 may apply, to each of the cells, a transmission configuration indication (TCI) state indicated in a corresponding one of the configurations. Each of the configurations may include at least one of whether the TCI state corresponding to the configuration is applied to both downlink and uplink and whether the TCI state corresponding to the configuration is applied to a plurality of types of at least one of channels and signals.

### (User Terminal)

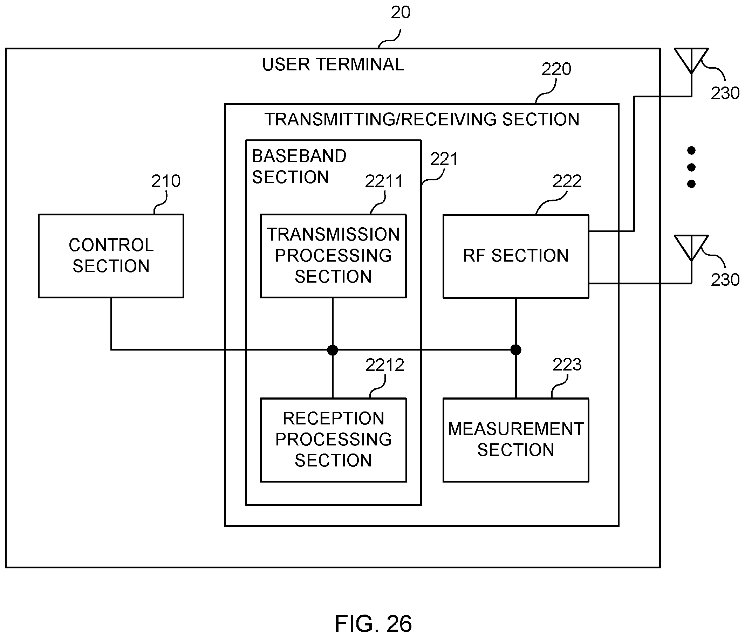

FIG. 26 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to a transmission configuration indication (TCI) state applied to a plurality of types of at least one of channels and signals. The control section 210 may determine whether the TCI state is shared with a specific signal.

The configuration may indicate whether the TCI state is shared with the specific signal. The control section 210 may determine whether the TCI state is shared with the specific signal, based on the configuration.

The configuration may indicate a resource or a resource set with the TCI state shared with the specific signal.

The configuration may indicate that there is no TCI state applied to one type of channel or signal.

The transmitting/receiving section 220 may receive an indication related to a transmission configuration indication (TCI) state applied to a plurality of types of at least one of channels and signals. The control section 210 may determine a reference signal for beam failure detection and radio link monitoring, based on the TCI state.

When the indication indicates a joint TCI state applied to downlink and uplink, the reference signal may be the joint TCI state.

When the indication indicates a downlink TCI state applied to downlink and an uplink TCI state applied to uplink, the reference signal may be the downlink TCI state.

When the transmitting/receiving section 220 receives a list related to a plurality of cells, detects a failure in at least one of the plurality of cells, and reports a new beam, the control section 210 may determine a plurality of TCI states to be used for the plurality of respective cells, based on the new beam.

The transmitting/receiving section 220 may receive a plurality of configurations corresponding to a plurality of respective cells. The control section 210 may apply, to each of the cells, a transmission configuration indication (TCI) state indicated in a corresponding one of the configurations. Each of the configurations may include at least one of whether the TCI state corresponding to the configuration is applied to both downlink and uplink and whether the TCI state corresponding to the configuration is applied to a plurality of types of at least one of channels and signals.

Each of the configurations may indicate one of a TCI state applied to both the downlink and the uplink, and a downlink TCI state applied to the downlink and an uplink TCI state applied to the uplink.

The plurality of configurations may include a configuration indicating a TCI state applied to a plurality of types of at least one of channels and signals and a configuration indicating a TCI state applied to one type of channel or signal.

When the plurality of configurations include a configuration indicating a TCI state applied to a plurality of types of at least one of channels and signals, the plurality of configurations may not include a configuration indicating a TCI state applied to one type of channel or signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

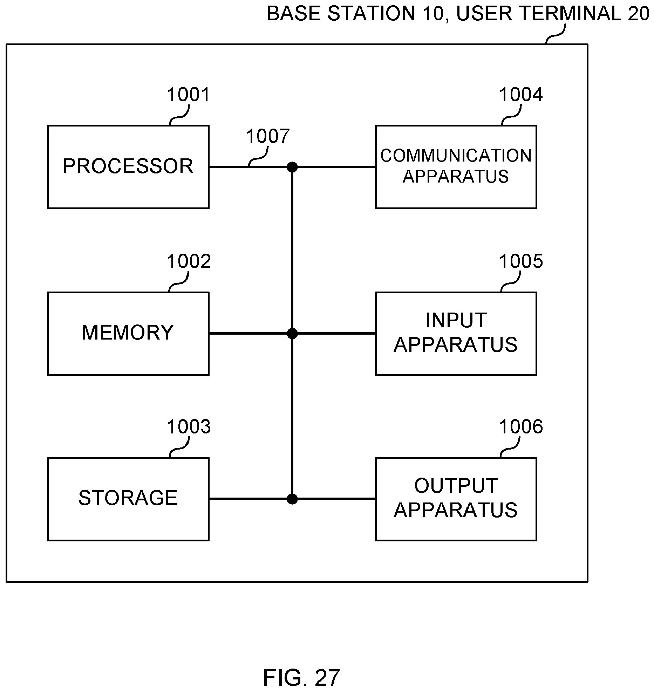

For example, a base station, a user terminal, and so on according to one embodiment of the present disclosure may function as a computer that executes the processes of the radio communication method of the present disclosure. FIG. 27 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

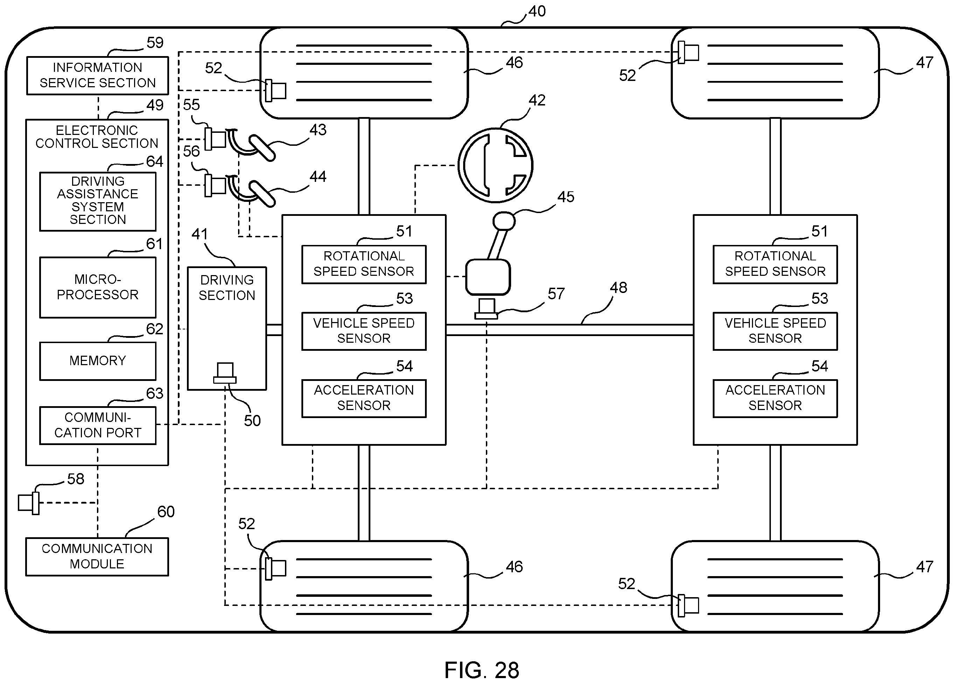

FIG. 28 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a configuration related to a transmission configuration indication (TCI) state applied to a plurality of types of at least one of channels and signals; and
a control section that determines whether the TCI state is shared with a specific signal.

2. The terminal according to claim 1, wherein
the configuration indicates whether the TCI state is shared with the specific signal, and
the control section determines whether the TCI state is shared with the specific signal, based on the configuration.

3. The terminal according to claim 1, wherein
the configuration indicates a resource or a resource set with the TCI state shared with the specific signal.

4. The terminal according to claim 1, wherein
the configuration indicates that there is no TCI state applied to one type of channel or signal.

5. A radio communication method for a terminal, the radio communication method comprising:
receiving a configuration related to a transmission configuration indication (TCI) state applied to a plurality of types of at least one of channels and signals; and
determining whether the TCI state is shared with a specific signal.

6. A base station comprising:
a transmitting section that transmits a configuration related to a transmission configuration indication (TCI) state applied to a plurality of types of at least one of channels and signals; and
a control section that determines whether the TCI state is shared with a specific signal.
